(19) Europäisches Patentamt
European Patent Office
Office européen des brevets

(11) **EP 3 665 542 B1**

(12) **EUROPÄISCHE PATENTSCHRIFT**

(45) Veröffentlichungstag und Bekanntmachung des Hinweises auf die Patenterteilung:
**02.12.2020  Patentblatt 2020/49**

(21) Anmeldenummer: **18786704.9**

(22) Anmeldetag: **09.10.2018**

(51) Int Cl.:
*G05D 23/19* (2006.01)       *F24H 1/00* (2006.01)
*F24D 19/10* (2006.01)

(86) Internationale Anmeldenummer:
**PCT/EP2018/077418**

(87) Internationale Veröffentlichungsnummer:
**WO 2019/072813 (18.04.2019 Gazette 2019/16)**

(54) **SELBSTREGULIERENDE EINSTELLVORRICHTUNG FÜR EIN DURCHFLUSSREGELVENTIL, EIN TEMPERIERUNGSSYSTEM ALS AUCH EINE VERTEILERVORRICHTUNG MIT DERSELBEN, SOWIE VERFAHREN HIERZU**

SELF-REGULATING SETTING DEVICE FOR A FLOW CONTROL VALVE, TEMPERATURE CONTROL SYSTEM AND DISTRIBUTION DEVICE COMPRISING THE SAME, AND METHOD FOR SAME

DISPOSITIF DE RÉGLAGE AUTORÉGULÉ POUR UNE VANNE DE RÉGULATION DE FLUIDE, SYSTÈME DE THERMORÉGULATION ET UN SYSTÈME DE DISTRIBUTION COMPRENANT CELUI-CI, AINSI QUE PROCÉDÉ ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.10.2017   DE 102017123560**

(43) Veröffentlichungstag der Anmeldung:
**17.06.2020   Patentblatt 2020/25**

(73) Patentinhaber: **EUT Edelstahl Umformtechnik GmbH**
**99867 Gotha (DE)**

(72) Erfinder:
• **STRAUB, Thomas**
**99867 Gotha (DE)**

• **STRAUB, Philipp**
**99867 Gotha (DE)**

(74) Vertreter: **Kuhnen & Wacker**
**Patent- und Rechtsanwaltsbüro PartG mbB**
**Prinz-Ludwig-Straße 40A**
**85354 Freising (DE)**

(56) Entgegenhaltungen:
EP-A1- 2 679 930          EP-A1- 3 012 705
WO-A1-2015/148596     DE-A1-102006 052 124
DE-A1-102013 014 833  US-A1- 2009 314 484
US-A1- 2014 321 839

**Beschreibung**

Die vorliegende Anmeldung betrifft eine Einstellvorrichtung zur selbstregulierenden Einstellung eines Durchflussregelventils einer Verbraucherschleife mit einem Wärmetauscher in einem Temperierungssystem und ein Temperierungssystem mit derselben sowie eine Verteilervorrichtung zur selbstregulierenden Verteilung eines flüssigen Wärmeträgers auf mehrere Verbraucherschleifen. Des Weiteren betrifft die Anmeldung ein entsprechendes Verfahren zur selbstregulierenden Einstellung eines Durchflusses in einer Verbraucherschleife und zur selbstregulierenden Verteilung, die einen bedarfsgerechten Ausgleich von Teilströmen eines flüssigen Wärmeträgers auf mehrere Verbraucherschleifen erzielt.

Ein technischer Hintergrund der Erfindung liegt in der Anwendung von Heizungs- und Klimatisierungsanlagen für Räume, wie insbesondere Fußbodenheizungen, Flächenheizungen oder Kühldecken, die in einem Gebäude installiert sind, um eine witterungsunabhängige wählbare Raumtemperatur bereitzustellen.

Im Stand der Technik sind aus dem Heizungsbau zahlreiche Anordnungen und Steuerungen zur komfort- und effizienzorientierten Verteilung und Regelung einer Wärmeenergie durch ein hydraulisches Netz im Gebäude bekannt, wobei ähnliche Installationen in Gebäuden ebenso zur Verteilung und Regelung einer Klimatisierungsenergie bzw. einem Wärmeentzug aus Räumen bekannt sind.

So offenbart beispielsweise die WO 2015/142879 A1 eine Nachrüstung für ein System zur Wärmeübertragung durch eine Flüssigkeit, wobei ein Thermostat zur Regulierung genutzt wird. In der dargestellten Ausführungsform weist die Nachrüstung eine Schaltung, einen Vorlauftemperatursensor und einen Rücklauftemperatursensor auf. Das Thermostat gibt ein Steuersignal für das Ventil aus. Es existieren ein heißer und ein kalter Einstellpunkt für die Rücklauftemperatur. Falls die Rücklauftemperatur außerhalb des Bereichs zwischen den Einstellpunkten liegt, also zu heiß oder zu kalt ist, springt eine Übersteuerung der Schaltung ein, um das Steuersignal vom Thermostat zu modifizieren, ansonsten wird es unverändert belassen. Bei bekannter Vorlauftemperatur können der heiße und kalte Einstellpunkt dynamisch modifiziert werden. Dies kann unter Verwendung einer auslesbaren Tabelle oder basierend auf einer Formel basierend auf der Vorlauftemperatur erfolgen. Es kann ferner eine Rückkoppelung vorgesehen sein, durch welche die Schaltung einen Öffnungsgrad des Ventils erlangt. Ferner kann ein Speicher für Daten eines Verlaufs von Temperaturen, Ventilstellung usw. vorgesehen sein. Hierbei gibt das Thermostat ein Steuersignal für die Ventilposition aus, sodass das Raumthermostat eine für das nachrüstbare Gesamtsystem spezifische Komponente darstellt, die für jeden Raum erforderlich ist.

Die US 2009/0314484 A1 beschreibt eine eigenständige Strömungsratensteuerung für einen Wärmetauscher zur Bereitstellung eines Steuersignals für ein Stellglied eines Strömungsventils. Ein erster und zweiter Temperatursensor messen eine Eingangs- und eine Ausgangstemperatur einer Flüssigkeit am Wärmetauscher. Eine Regelungseinheit spricht auf eine Temperaturdifferenz zwischen der Eingangs- und der Ausgangstemperatur an, um das Steuersignal derart anzupassen, dass die Temperaturdifferenz im Wesentlichen konstant gehalten wird. Die Steuereinheit kann eine eigenständige Vorrichtung sein, die zur Nachrüstung an einem herkömmlichen Ventil und Stellglied angepasst ist. Anderenfalls können die Steuereinheit und das Stellglied integral mit dem Ventil ausgebildet sein, sodass eine unabhängige Einheit entsteht, die lediglich eine Installation und Verbindung der Temperatursensoren erfordert. Die Steuerung wird nach einem Algorithmus betrieben und das Ventil wird unabhängig von einer zentralen Steuerung, wie sie in fortgeschrittenen Gebäudeinstallationen üblich ist, betrieben. Dabei hält die Steuerung die Temperaturdifferenz (Eingang/Ausgang Wärmetauscher) auf einem konstanten Wert. Dieser Wert wird unter Verwendung eines DIP Schalters übereinstimmend mit der Kapazität des Wärmetauschers voreingestellt. Die Regelung des Systems bietet somit nach der Voreinstellung keine Anpassungsmöglichkeiten an äußere bzw. veränderliche Begebenheiten oder eine intelligente Anpassung an individuelle Nutzerverhalten.

Aus der DE 10 2006 052 124 A1 ist ferner ein Abgleichsystem für eine Fußbodentemperierungs-Anordnung bekannt, bei dem an jedem Rücklauf ein Rücklauftemperaturregler mit einem die Temperatur im jeweiligen Rücklauf erfassenden Temperatursensor angeordnet ist, und bei dem alle Rücklauftemperaturregler ein gleiches Temperatursteuerverhalten aufweisen. Die Rücklauftemperaturregler haben die gleichen Kennlinien in Abhängigkeit zwischen der Temperatur und dem Durchlass. An einem elektrischen Rücklauftemperaturregler meldet der Temperatursensor die Temperatur im Rücklauf an einen Regler, der seinerseits eine verstellbare Drosseleinrichtung wie ein Ventil verstellt. Der Rücklauftemperaturregler sorgt dafür, dass das den Heizkreis verlassende Wasser immer eine vorbestimmte Temperatur hat. Ferner ist ein Verteiler vorgesehen, in den jeder Rücklauf mit einem Anschluss mündet, wobei der Rücklauftemperaturregler dem Anschluss zugeordnet ist.

Aus der DE 10 2009 004 319 A1 ist ein Verfahren zur Durchführung des hydraulischen Abgleichs bekannt, in dem die Rücklauftemperatur an einem Wärmetauscher erfasst wird, und der Volumenstrom durch den Wärmetauscher in Abhängigkeit der Rücklauftemperatur gesteuert wird. Dabei kann aus der Rücklauftemperatur und einem Soll-Wert der Rücklauftemperatur eine Regeldifferenz gebildet werden, und der Volumenstrom durch den Wärmetauscher in Abhängigkeit der Regeldifferenz gesteuert werden. Alternativ können eine Temperaturdifferenz zwischen Vorlauftemperatur und Rücklauftemperatur ermittelt werden, sodass aus der Temperaturdifferenz und einem Soll-Wert der Temperaturdifferenz eine Regeldifferenz gebildet wird, und der Volumenstrom durch den Wärmetauscher in Abhängigkeit dieser Regeldifferenz gesteuert wird.

Die DE 10 2014 202 738 A1 beschreibt ein Verfahren zum automatisierten hydraulischen Abgleich einer Heizungsanlage. In diesem Verfahren wird eine mittlere Aufheizzeit, insbesondere eine mittlere Aufheizzeit aller Wärmeverbraucher und/oder eine mittlere Aufheizzeit aller Räume um einen festen Temperaturwert, ermittelt. Es werden maximale Durchflussöffnungen der Ventile in Abhängigkeit davon bestimmt. Es wird bestimmt, ob eine Aufheizzeit die mittlere Aufheizzeit über- oder unterschreitet. Hierdurch wird die Heizungsanlage schrittweise hydraulisch abgeglichen und an sich ändernde Bedingungen der Heizungsanlage angepasst. Dabei ist die Aufheizzeit des Wärmeverbrauchers bzw. eines Raumes diejenige, die benötigt wird, um den Wärmeverbraucher bzw. einen Raum von einer Ausgangstemperatur auf eine Zieltemperatur zu erwärmen. Die mittlere Aufheizzeit ergibt sich dann aus der Summe aller Aufheizzeiten, dividiert durch die Anzahl der vorhandenen Wärmeverbraucher bzw. Räume. Zur Bildung der Summe aller Aufheizzeiten sind eine gemeinsame Kommunikation zwischen den Heizkreisen oder mit einer gemeinsamen Steuerung sowie eine entsprechende Verkabelung und deren Installation oder bzw. alternative Kommunikationsschnittstellen erforderlich.

Die DE 10 2015 222 110 A1 offenbart ein Ventil, das eine Aufheizzeit mindestens eines Wärmeverbrauchers und/oder eine Aufheizzeit eines Raumes um eine Temperaturdifferenz bestimmt, wobei das Ventil eine ansteuerbare Durchflussöffnung aufweist. Eine maximale Ventilstellung wird in Abhängigkeit davon eingestellt, ob eine Ist-Aufheizzeit eine vorgebbare Soll-Aufheizzeit überschreitet oder unterschreitet, wodurch die Heizungsanlage hydraulisch abgleichbar und an sich ändernde Randbedingungen anpassbar ist. Zur Bestimmung der Ist-Aufheizzeit wird zu einem Anfangszeitpunkt eine momentane Temperatur gemessen und gespeichert. Nach Verstreichen der Zeiteinheit, zum Beispiel 10 Minuten, wird die momentane Temperatur nochmals gemessen und gespeichert. Die Ist-Aufheizzeit ergibt sich aus dem Betrag der Differenz der beiden gemessenen Temperaturwerte, geteilt durch die Zeiteinheit, welche zwischen den beiden Temperaturmessungen liegt. D.h. das Ventil nimmt in zeitlichen Abständen eine Temperaturmessung an der im Raum verlegten Wärmetauscherstrecke eines Heizkreises und/oder im Raum vor. Somit werden zwei Temperaturen gemessen wobei das Ventil selbst keine Aufheizzeit in Bezug auf den Verlauf dieser Temperaturen bestimmt.

Die EP 2 653 789 A2 lehrt eine Steuerung, die einen Regler umfasst, mit welchem eine Temperaturdifferenz zwischen der Vorlauftemperatur und der Rücklauftemperatur eines Temperierungsfluids erfasst wird. Dabei veranlasst der Regler ausgehend von dieser Temperaturdifferenz das Stellglied des Ventils derart zum Einstellen des Öffnungsgrades des Ventils, dass die mittlere Temperaturdifferenz zwischen der Vorlauftemperatur und der Rücklauftemperatur des Temperierungsfluids in einem vorbestimmten Wertebereich liegt. Ferner kann ein Thermostat zur Erfassung einer Raumtemperatur vorgesehen sein, das Temperaturdaten bereitstellt. Dabei ist wiederum in Systemen mit mehreren Temperierungsanordnungen eine zentrale Steuerung mit einem Regler für die mehreren Ventile bereitgestellt.

Die US 2014/321839 A1 beschreibt eine Heizelementsteuereinheit für ein Flüssigkeitsheizsystem, das zu folgenden Schritten ausgelegt ist: Bestimmen des Arbeitszyklus eines Heizelements durch Überwachen der Wellenform des elektrischen Stroms zu dem Heizelement; Modulieren des Zeitpunkts des Heizbeginns durch das Heizelement in Abhängigkeit von einer erwarteten Dauer des Abschlusses des Heizprozesses und von einer erforderlichen Zeit, zu der der Heizprozess abgeschlossen werden soll; wobei die genannte erwartete Dauer in Abhängigkeit von dem genannten Arbeitszyklus bestimmt wird.

Die EP 2 679 930 A1 beschreibt eine Kältekreislaufvorrichtung mit einem Kompressor, Wärmetauschern und einem Expansionsventil, wobei die Kältekreislaufvorrichtung ein Ventil in einem Bypass steuern kann.

Die WO 2015/148596 A1 beschreibt ein Steuersystem, das flexibel für eine Nachrüstverwendung mit mehreren Typen von boilerbasierten Heizungssystemen ausgelegt ist, und das eine Thermostatvorrichtung, ein Benutzerinterface, einen Prozessor, einen Speicher und einen Temperatursensor umfasst. Das Steuersystem ist dazu ausgelegt, selektiv eine Aktivierung des boilerbasierten Heizungssystems zu steuern.

Die EP 3 012 705 A1 beschreibt eine Wärmetauscherventilanordnung, ein Heizsystem und ein Verfahren zum Betrieb eines Heizsystems. Die Wärmetauscherventilanordnung weist ein Druckregelventil auf, das ein Ventilelement umfasst, das mit einem Drosselelement zusammenwirkt und einen Differentialdruck steuert. Ferner sind Erkennungsmittel bereitgestellt, um zu erkennen, ob der Differentialdruck einen vorbestimmten Mindestwert überschreitet.

Ausgehend von dem genannten Stand der Technik, ist es Aufgabe der vorliegenden Erfindung, eine alternative Einstellvorrichtung und ein Verfahren für eine Verbraucherschleife mit Wärmetauscher in einem Temperierungssystem zu schaffen, die einen effizienten Volumenstrom eines Wärmemediums durch einen Wärmetauscher selbstregulierend einstellen und basierend auf vorangegangenen Inbetriebnahmen laufend anpassen.

Ein weiterer Aspekt der Erfindung besteht darin, ein alternatives Temperierungssystem, eine alternative Verteilervorrichtung und ein Verfahren zu schaffen, die eine bedarfsgerechte Verteilung eines Volumenstroms des Wärmeträgers auf mehrere Verbraucher selbstregulierend aufteilen.

Diese Aufgaben und Aspekte werden durch die Merkmale einer Einstellvorrichtung nach Anspruch 1 und die entsprechenden Schritte eines Verfahrens nach Anspruch 17 gelöst.

Zusammengefasst weist die Einstellvorrichtung die Merkmale des Anspruchs 1 auf.

Die Einstellvorrichtung bildet dabei die erfindungsgemäß maßgebliche Komponente eines Temperierungssystems mit einem zugeordneten Raumthermostat, in dem das dementsprechende erfindungsgemäße Verfahren umgesetzt wird, und ist demnach auch als separat handelbare Einheit schutzbedürftig.

Ein dementsprechendes Temperierungssystem weist die Merkmale des Anspruchs 10 auf.

Das entsprechende Verfahren zur selbstregulierenden Einstellung eines Durchflusses weist die Merkmale des Anspruchs 17 auf.

Eine Aktivierung nach Definition der vorliegenden Offenbarung ist ein Einschaltzustand oder eine Inbetriebnahme aus einem Standby-Modus der Einstellvorrichtung oder zumindest des Berechnungsmittels in der Einstellvorrichtung, der bzw. die durch einen kontinuierlichen Signalpegel gestützt, durch einen Signalimpuls getriggert, oder eine in Form eines Signals angelegte Steuerspannung bzw. Ansteuerspannung zur Schaltung eines Transistors an einer Leistungsversorgung, eine in Form eines Signals direkt zugeführte Leistungsversorgung oder dergleichen ausgelöst wird. Eine Aktivierungsdauer bezieht sich definitionsgemäß auf die Zeitdauer vom Anfang bis zum Ende des dementsprechend ausgelösten Einschaltzustands oder der Inbetriebnahme aus einem Standby-Modus bzw. der Empfangsdauer eines kontinuierlichen Signalpegels, Steuerspannung, Ansteuerspannung oder Leistungszufuhr, oder der Zeitdauer zwischen zwei Signalimpulsen, die einen Einschaltvorgang und einen Abschaltvorgang bewirken. Eine Deaktivierung und eine Deaktivierungsdauer sind demgemäß der komplementäre Zustand und Zeitdauer, in dem bzw. in der kein Betrieb der Einstellvorrichtung vorliegt oder zumindest keine Berechnung des Berechnungsmittels oder Ansteuerung des Stellglieds erfolgt.

In ihrer allgemeinsten Form sieht die vorliegende Erfindung somit erstmals vor, einen Volumenstrom und eine resultierende Temperaturspreizung, d.h. einen Energieeintrag bzw. Energieaustrag zwischen Temperierungsquelle und Raum am Wärmetauscher, bzw. Heizen oder Kühlen, dezidiert anhand von während der Nutzung erfassten Aktivierungsdauern und/oder Deaktivierungsdauern zu regeln, die im vorgesehenen Anwendungsfall einer Aufheizzeit oder Kühlzeit des betreffenden Raumes von einer tatsächlichen Raumtemperatur auf eine vorgegebene Raumtemperatur entsprechen.

Die erfindungsgemäße Selbstregulierung der Ventileinstellung verschafft den Vorteil, einen optimalen Betriebspunkt in Bezug auf eine individuelle Installationsumgebung des Wärmetauschers auf einfache Weise effektiv zu ermitteln und sich selbstständig daran anzupassen. Dies trifft insbesondere auf die Anwendung einer Flächenheizung in Form einer Heizschlange einer Fußbodenheizung zu, bei der ein Aufheizverhalten durch partielle Isolation und Wärmeübergänge des betreffenden Raumes im Gebäudes auf eine für den Installateur nicht vorab erfassbare Weise variiert, und sich in raumspezifisch resultierenden Heizdauern widerspiegelt. Die vorliegende Erfindung setzt an diesem Punkt an, indem sie Heizdauern erfasst und in der erfindungsgemäßen Selbstregulierung mit einem aus dem genannten Stand der Technik bekannten Regelungseinfluss verknüpft, welcher der Einhaltung eines energieeffizienten Betriebsbereichs dient. Dieser Regeleinfluss betrifft die Temperaturdifferenz vor und nach dem Wärmetauscher, die aus einem Volumenstrom und einer Vorlauftemperatur im Verhältnis zur Umgebungs- bzw. Gebäudetemperatur resultiert.

Ferner verschafft die erfindungsgemäße Selbstregulierung der Ventileinstellung den Vorteil, dass sie sich intelligent an das Nutzerverhalten anpassen und den Komfort einer schnell reagierenden Raumtemperierung innerhalb eines Bereichs von effizienten Betriebspunkten selbstständig optimiert. So wird eine tatsächliche Heizdauer, die von dem Nutzerprofil, wie z.B. der zeitlichen Heizungsbetätigung und deren Temperaturvorgaben abhängt, fortlaufend an Heizdauern herangeführt, die einer als komfortabel wahrnehmbaren Reaktionszeit einer Raumtemperaturanpassung entsprechen.

Darüber hinaus verschafft die erfindungsgemäße selbstregulierende Einstellvorrichtung den Vorteil, dass sie durch einfache, kostengünstige Bauteile mit zuverlässiger Betriebsweise und einen geringen Verdrahtungs- und Installationsaufwand realisierbar ist. So entfällt beispielsweise eine zentrale Steuereinheit, die mit Temperatursensoren, Stellgliedern und Ventilpositionserfassungen von sämtlichen Verbraucherschleifen mit Wärmetauschern verbunden werden müsste. Ferner ist weder eine Raumtemperaturerfassung noch eine Temperaturerfassung allgemein und auch keine Kommunikation von derlei Temperaturdaten zu einer zentralen Steuereinheit erforderlich, da eine Heizdauer nicht durch Erfassung eines Temperaturverlaufs, sondern seitens des dezidierten Berechnungsmittels der Einstellvorrichtung lediglich das Aktivierungssignal oder Deaktivierungssignal des Thermostats benötigt bzw. verarbeitet wird, was in einfacher Ausgestaltung eines Raumthermostats auch ohne Sensorik für die vorliegende Raumtemperatur erfolgen kann. Somit können sowohl das Raumthermostat als auch das Senden und der Empfang des Signals durch einfache Komponenten umgesetzt werden, da keine Daten oder berechnete bzw. modellierte Steuerungssignale seitens des Raumthermostats in jedem Raum erzeugt und übermittelt werden müssen.

Die Verteilervorrichtung zur selbstregulierenden Verteilung eines flüssigen Wärmeträgers weist die Merkmale des Anspruchs 16 auf.

Das entsprechende Verfahren zur Verteilung eines flüssigen Wärmeträgers zeichnet sich insbesondere dadurch aus, dass für jede Verbraucherschleife das erfindungsgemäße Verfahren zur selbstregulierenden Einstellung eines Durchflusses eines flüssigen Wärmeträgers durch eine extern aktivierbare Verbraucherschleife unabhängig voneinander durchgeführt wird.

Die erfindungsgemäße Selbstregulierung der Verteilung des flüssigen Wärmeträgers bzw. die Verteilervorrichtung werden somit durch eine hydraulische Parallelschaltung von Verbraucherschleifen gebildet, in denen jeweils unabhängig die erfindungsgemäße Selbstregulierung der Ventileinstellung erfolgt.

Die erfindungsgemäße selbstregulierende Verteilervorrichtung verschafft in einem Temperierungssystem mit mehreren Verbraucherschleifen den Vorteil, dass sie besonders einfach installiert oder nachgerüstet werden kann. Sie kann als vormontierte Verteilergarnitur mit den Durchflussregelventilen und den Einstellvorrichtungen bereitgestellt werden, die lediglich den installierten Verbraucherschleifen und Schnittstellen von Raumthermostaten verbunden wird. Danach ist das Temperierungssystem, wie insbesondere eine Fußbodenheizungsanordnung nicht nur fertig montiert und wird zugleich fortan hydraulisch bedarfsgerecht ausgeglichen.

Die erfindungsgemäße Selbstregulierung der Verteilung verschafft in einem Temperierungssystem mit mehreren Verbraucherschleifen den Vorteil, dass besonders einfach, d.h. ohne weitere Vorkehrungen und Mittel ein Resultat erzielt wird, das mindestens gleichwertig ist oder besser als ein automatischer bedarfsgerechter Ausgleich von Teilströmen des Gesamtvolumenstroms des Wärmeträgers durch die Verbraucherschleifen. Die erfindungsgemäße Selbstregulierung der Verteilung erreicht also ein Ergebnis, das mindestens gleichwertig zu oder besser als eine Abstimmung aller Verbraucherschleifen ist, die zeitweise in einer gemeinsamen FußbodenheizungsAnordnung oder dergleichen verwendet werden.

Der erfindungsgemäß erzielte bedarfsgerechte Ausgleich, entspricht im Ergebnis der Zielsetzung eines im Stand der Technik bekannten "hydraulischen Abgleichs" eines Heizungssystems. Dieser wird jedoch durch eine andere Herangehensweise vorgenommen, die auf einer Gesamtbetrachtung des Systems mit Vergleichsberechnungen zwischen den Parametern der Verbraucherschleifen basiert. Ein solcher hydraulischer Abgleich wird entweder durch eine übergeordnete Steuerung vorgenommen oder in hydraulischen Systemen vor Inbetriebnahme durch einen Heizungsplaner oder Heizungsbauer bestimmt und einmalig statisch eingestellt. Es hat sich jedoch herausgestellt, dass letzterer Fall mit einer hohen Fehleinstellungsquote einhergeht, wobei ferner eine statische Einstellung per se nur auf einen als Muster dienenden Grundzustand abgeglichen werden kann. Dabei ist bei derartigen hydraulischen Systemen der als Muster dienende Grundzustand häufig der Maximallastfall, der lediglich an sehr wenigen Tagen in einem Jahr auftritt, wohingegen die erfindungsgemäße Selbstregulierung der Verteilung eine vom Maximallastfall unabhängige kontinuierliche Optimierung ermöglicht.

Die erfindungsgemäße Selbstregulierung der Verteilung ist dynamisch, d.h. sie passt sich automatisch auf individuell wechselnde Leistungsanforderungen bzw. Ein- und Abschaltungen der Verbraucherschleifen an. Dies ist insbesondere ohne eine vielfach verdrahtete zentrale Steuereinheit und entsprechende Erfassungen und Berechnungen zum Vergleich von Parametern unter den Verbraucherschleifen, und lediglich durch einen parallelen Betrieb bzw. Anordnung der selbstregulierenden Ventileinstellungen realisierbar. Auch vor Inbetriebnahme ist daher kein potenziell fehlerbehafteter Eingriff eines Installateurs erforderlich, wodurch zudem Arbeitsaufwand eingespart wird.

Die erfindungsgemäße Selbstregulierung der Verteilung setzt hierbei eine bedarfsgerechte Verteilung der Teilströme um, deren Verhältnis einerseits durch die unabhängig selbstregulierten Ventileinstellungen und durch die mittels Länge und Durchmesser definierten Strömungswiderstände der Verbraucherschleifen resultiert sowie andererseits durch den verfügbaren gesamten Volumenstrom des Wärmeträgers begrenzt ist.

In veranschaulichenden Extremfällen wird dadurch einerseits verhindert, dass eine kleine Verbraucherschleife mit geringem Strömungswiderstand in einem kleinen Raum, wie einem Gäste-WC hydraulisch überversorgt wird, was zu einem übermäßigen bzw. ineffizienten Wärmeeintrag bei unnötig kurzer Heizdauer führt, und aufgrund des hohen Volumenstroms zu einem Ventilpfeifen führen kann, während eine Heizdauer in größeren Räumen unnötig zunimmt. Falls andererseits sämtliche Räume beheizt werden sollen und der gesamte Volumenstrom nicht für eine kurze Heizdauer in allen Räumen ausreicht, stellt sich eine bedarfsgerechte Verteilung ein, die sich in einer verhältnismäßigen Begrenzung jedes Teilstroms der Verbraucherschleifen anhand deren Ventilstellung und Strömungswiderstand einstellt.

Der Regelungseinfluss der Temperaturdifferenz vor und nach einem Wärmetauscher bzw. Verbraucherschleife gleicht dabei den konträren Zusammenhang aus, dass eine große Verbraucherschleife mit einem hohem Strömungswiderstand, die einem großen Raum mit hohem Energiebedarf zugeordnet ist, nicht einen geringeren sondern größeren Teilstrom im Vergleich zu kleinen Verbraucherschleifen mit geringem Strömungswiderstand und geringem Energiebedarf erhält. Dies erfolgt jedoch wiederum ohne jegliche Vergleichsanstellungen oder Bilanzen durch eine übergeordnete Steuerung.

Der erfindungsgemäße Einbezug der resultierenden Heizdauer gleicht darüber hinaus noch Begebenheiten des Gebäudes, wie z.B. Stockwerk, Kellerlage oder Außenwandverhältnis, und der Installation, wie z.B. ungleiche Verhältnisse einer verlegten Flächenheizung zur Grundfläche, oder dergleichen in einem Raum aus.

Vorteilhafte Weiterbildungen der vorliegenden Erfindung sind Gegenstand der abhängigen Ansprüche.

Gemäß einem Aspekt der Erfindung kann die Einstellvorrichtung dazu eingerichtet sein, während einer Aktivierungsdauer die durch das Berechnungsmittel berechnete elektrische Ansteuerung an das Stellglied auszugeben, und während einer Deaktivierungsdauer keine elektrische Ansteuerung oder eine vorbestimmte elektrische Ansteuerung, die der geschlossenen Position des Durchflussregelventils entspricht, an das Stellglied auszugeben. Dadurch erfolgt je nach Typ des Stellglieds eine Absperrung der Verbraucherschleife nach einem Heizvorgang, sodass eine übermäßige Energiezufuhr bzw. eine Überschwingen der Temperaturregelung verhindert wird.

Gemäß einem Aspekt der Erfindung kann die Einstellvorrichtung dazu eingerichtet sein, während einer Deaktivierungsdauer eine elektrische Leistungszufuhr zu dem Berechnungsmittel und/oder zu der Einstellvorrichtung auszuschalten. Dadurch wird in den Deaktivierungsdauern, die sich z.B. auch über einen Sommer erstrecken können, Strom eingespart.

Gemäß einem Aspekt der Erfindung kann das Berechnungsmittel dazu eingerichtet sein, zumindest einen Wert einer vorangegangenen Öffnungsposition des Durchflussregelventils in dem Speichermittel zu speichern. Dadurch kann bei Aktivierung der Einstellvorrichtung zunächst eine Ventilstellung als Ausgangspunkt angefahren werden, die bereits im Laufe der vorherigen Heizdauern ermittelt wurde, und in der laufenden Heizdauer lediglich abweichend angepasst werden braucht.

Gemäß einem Aspekt der Erfindung kann das Speichermittel einen vorab gespeicherten Referenzwert für die Aktivierungsdauer und/oder einen vorab gespeicherten Referenzwert für die Deaktivierungsdauer enthalten. Dadurch wird eine als komfortabel festgelegte Zeitdauer zur Erreichung einer vorgegebenen Temperatur als anstrebsamen Referenzwert hinterlegt, nach dem sich die Selbstregulierung richtet.

Gemäß einem Aspekt der Erfindung kann das Speichermittel einen vorab gespeicherten Wertebereich für die Temperaturspreizung enthalten. Dadurch kann auf einfache Weise sichergestellt werden, dass der Betriebspunkt des Wärmetauschers innerhalb eines energieeffizienten Bereichs gewählt wird.

Gemäß einem Aspekt der Erfindung kann das Speichermittel ein vorab gespeichertes Kennfeld mit zugeordneten Werten von Aktivierungsdauern und/oder Deaktivierungsdauern und vorgegebenen Temperaturspreizungen zur Bestimmung der Temperaturspreizung enthalten. Dadurch kann eine vorbestimmte universelle Regelung mit geringerer Verarbeitungsleistung umgesetzt werden.

Gemäß einem Aspekt der Erfindung kann das Speichermittel eine vorab gespeicherte Steuerungslogik zur Berechnung der Temperaturspreizung enthalten. Dadurch kann eine individuellere Regelung umgesetzt werden.

Gemäß einem Aspekt der Erfindung kann die Einstellvorrichtung dazu eingerichtet sein, die Temperaturspreizung in Abhängigkeit der Vorlauftemperatur zu verändern, und/oder die Einstellvorrichtung dazu eingerichtet sein, eine Bandbreite der Temperaturspreizung in Abhängigkeit der Vorlauftemperatur zu verändern, und/oder die Einstellvorrichtung dazu eingerichtet sein, über die Schnittstelle weitere externe Signale mit Betriebsparametern aus dem Temperierungssystem zu empfangen; und das Berechnungsmittel dazu eingerichtet sein, die Temperaturspreizung in Abhängigkeit der Betriebsparameter anzupassen. Dadurch kann eine Regelung umgesetzt werden, die anhand einer Änderung der Vorlauftemperatur Witterungsschwankungen oder Jahreszeiten erfasst und einen effizienten Arbeitspunkt entsprechend anpasst oder weitere komfortorientierte Funktionen, die an einem multifunktionalen Raumthermostat vorgegeben werden können, in die Regelung mit einfließen lassen.

Gemäß einem Aspekt der Erfindung können in einem Raum des Gebäudes das Thermostat und zwei oder mehr Verbraucherschleifen bzw. Heiz- oder Kühlkreise angeordnet sein. Dadurch ist es möglich große Räume durch mehrere installierte Heiz- oder Kühlschlangen mit standardisierten Durchmessern und einem in Summe geringeren Strömungswiderstand zu versorgen, die durch eigene Einstellvorrichtungen jedoch denselben Raumthermostat geregelt werden.

Gemäß einem Aspekt der Erfindung kann das Thermostat ein Bimetall-Element aufweisen, das auf die tatsächliche Raumtemperatur anspricht und eine Ausgabe des Aktivierungssignals oder des Deaktivierungssignals betätigt. Dadurch wird eine besonders einfache, zuverlässige und kostengünstige Ausführung des Raumthermostats ohne Elektronik und Sensorik realisiert.

Gemäß einem Aspekt der Erfindung kann das Aktivierungssignal oder Deaktivierungssignal ein binäres Signal sein, das einen Einschaltzustand mit einem Signalpegel oberhalb eines vorbestimmen Pegelwertes und einen Ausschaltzustand ohne Signalpegel oder einem Signalpegel unterhalb des vorbestimmen Pegelwertes umfasst. Dadurch wird ebenfalls eine besonders einfache und kostengünstige Ausführung der Signalerzeugung und der Signalerkennung realisiert.

Gemäß einem Aspekt der Erfindung kann das Thermostat einen Mikrocomputer und einen Temperatursensor zur Erfassung der tatsächlichen Raumtemperatur umfassen; wobei das Thermostat einen Verlauf der tatsächlichen Raumtemperatur erfasst und speichert, während und/oder nachdem das Aktivierungssignal oder das Deaktivierungssignal ausgegeben wird; und das Thermostat und die Einstellvorrichtung dazu eingerichtet sein, Daten zu einem Verlauf erfasster tatsächlicher Raumtemperaturen zu kommunizieren. Dadurch wird eine multifunktionale Ausführung des Temperierungssystems realisiert, die eine adaptive Regelung an weitere komfortorientierte Parameter, wie eine Beeinflussung eines Heizkurvenverlaufs in Abhängigkeit einer Ausgangs- und Zieltemperatur und/oder einer Außentemperatur oder einer Uhrzeit oder dergleichen ermöglicht.

Gemäß einem Aspekt der Erfindung kann das Aktivierungssignal und/oder das Deaktivierungssignal mittels drahtlosen Schnittstellen von dem bestimmten Thermostat zu der zugeordneten Einstellvorrichtung kommuniziert werden. Dadurch kann eine Verkabelung von dem Raumthermostat zu der Einstellvorrichtung entfallen und ein Installationsaufwand verringert werden. Ferner kann über eine solche drahtlose Schnittstelle ebenso eine Verbindung zwischen einem Smartphone, Tablet PC oder dergleichen und einer Einstellvorrichtung oder einem Thermostat aufgenommen werden, wodurch eine weitere Eingabemöglichkeit für den Nutzer zum System ermöglicht wird.

Gemäß einem Aspekt der Erfindung kann eine kleinere Temperaturspreizung bestimmt werden, wenn zumindest eine vorangegangene Aktivierungsdauer größer als ein Referenzwert ist, oder eine größere Temperaturspreizung bestimmt werden, wenn zumindest eine vorangegangene Aktivierungsdauer kleiner als der Referenzwert ist. Dadurch orientiert sich die Selbstregulierung an einer vorab als komfortabel festgelegten Zeitdauer zur Erreichung einer vorgegebenen.

Gemäß einem Aspekt der Erfindung kann die Temperaturspreizung basierend auf einem Verlauf aufeinander folgender, vorangegangener Aktivierungsdauern bestimmt werden. Dadurch wird eine bessere Anpassung der Selbstregulierung an Nutzerverhalten, Jahreszeiten und dergleichen ermöglicht.

Gemäß einem Aspekt der Erfindung kann die Einstellvorrichtung ein Positionserfassungsmittel aufweisen, das derart ausgebildet ist, eine aktuelle Position des Stellglieds zu erfassen. Dadurch wird eine je nach Typ des Stellglieds erforderliche Einhaltung eines vorgegebenen Stellwegs ermöglicht.

Gemäß einem Aspekt der Erfindung kann das Positionserfassungsmittel aus einem Magneten und einem dem Magneten zugeordneten Hallsensor gebildet sein. Dadurch wird eine exakte Erfassung und Ausführung eines vorgegebenen Stellwegs ermöglicht.

Die Erfindung wird anhand der nachfolgenden ausführlichen Figurenbeschreibung mit Bezug auf die begleitende Zeichnung besser verständlich, wobei dieselben Bezugszeichen für dieselben Gegenstände Verwendung finden, in denen:

Fig. 1    eine Querschnittsansicht durch eine erfindungsgemäße Einstellvorrichtung zeigt;

Fig. 2    eine Darstellung eines Temperierungssystems mit erfindungsgemäßen Einstellvorrichtungen in einer Verteilervorrichtung, Thermostaten und weiteren Systemkomponenten zeigt;

Fig. 3    ein Blockschaltbild, das die Systemkomponenten zur erfindungsgemäßen Selbstregulierung darstellt;

Fig. 4    ein Flussdiagramm, das Schritte für eine Bestimmung der Tempertaturspreizung in der erfindungsgemäßen Selbstregulierung darstellt; und

Fig. 5    ein Zustandsautomat zur Darstellung von logischen Verknüpfungen in der erfindungsgemäßen Selbstregulierung.

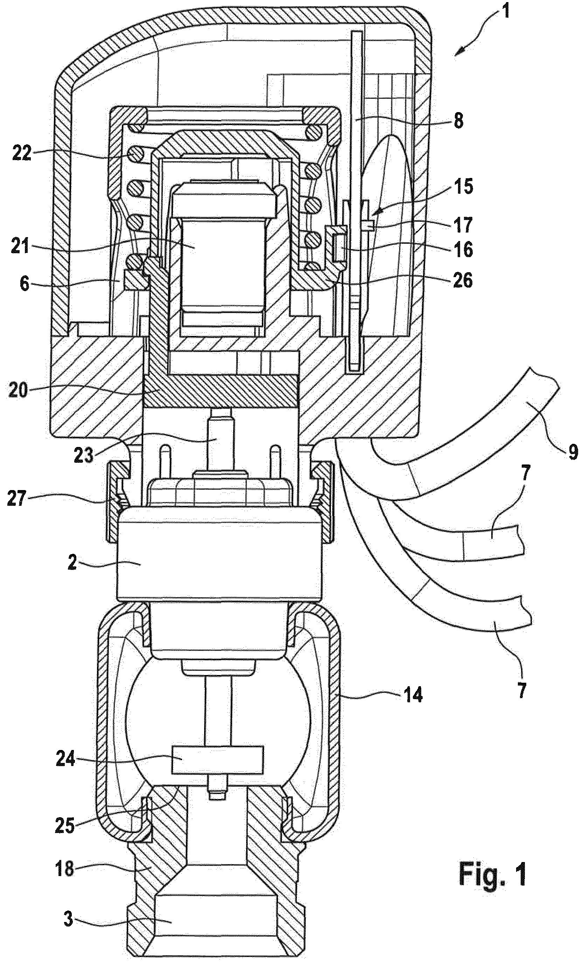

Nachstehend wird eine beispielhafte Ausführungsform der erfindungsgemäßen Einstellvorrichtung 1 mit Bezug auf Fig. 1 beschrieben.

Die Einstellvorrichtung 1 ist auf einem Durchflussregelventil 2 montiert. Die Einstellvorrichtung 1 ist mittels eines Flansches 27 am Durchflussregelventil 2 befestigt. Das Durchflussregelventil 2 ist seinerseits in der hier abgebildeten Ausführungsform in einen Rücklaufverteiler 14 eingebaut. Der Rücklaufverteiler 14 weist ein in ihn eingeschraubtes Anschlussstück 18 auf, das den Rücklaufverteiler 14 mit einer nicht näher dargestellten Verbraucherschleife 3 verbindet. Das Durchflussregelventil 2 kann auch anderweitig in den Rücklaufverteiler 14 eingebaut sein. Das Anschlussstück 18 kann in den Rücklaufverteiler auch eingepresst, eingeklebt, eingelötet, angeschweißt oder anderweitig befestigt sein.

Die Einstellvorrichtung 1 umfasst ein elektrisch ansteuerbares Stellglied 6. Im vorliegenden Beispiel fallen die Längsachse der Einstellvorrichtung 1 und des Stellglieds 6 zusammen. Das elektrisch ansteuerbare Stellglied 6 enthält ein in axialer Richtung bewegliches Betätigungsmittel 20. Die Längsachse des Betätigungsmittels 20 fällt ebenfalls mit der Längsachse des elektrisch ansteuerbaren Stellgliedes 6 zusammen. Das Betätigungsmittel 20 ist innerhalb des elektrisch ansteuerbaren Stellgliedes 6 angeordnet, weist ein in axialer Richtung längenveränderbares Bauteil 21, beispielsweise ein Dehnstoffelement 21, insbesondere eine Wachspatrone, auf, und ist durch eine koaxial dazu konzentrisch angeordnete Spiralfeder 22 vorgespannt. Das längenveränderbare Bauteil 21 kann auch als elektrischer Miniaktuator ausgebildet sein, wenngleich diese häufig aus Kostengründen und wegen der vermuteten Geräuschentwicklung eher nicht erwogen werden. Statt der Spiralfeder 22 kann auch ein anderes geeignetes Mittel, beispielsweise ein Ringfederpaket oder dergleichen, eine Vorspannung erzeugen.

Durch elektrische Leitungen 7 erhält das elektrisch ansteuerbare Stellglied 6 Signale von einem nicht näher dargestellten Temperatursensor am Rücklaufverteiler 14 hinsichtlich der ausgangsseitigen Rücklauftemperatur $T_{Rücklauf}$ des durchfließenden Wärmeträgers. Das elektrisch ansteuerbare Stellglied 6 erhält über die Leitungen 7 auch Temperatursignale von einem Temperatursensor am hier nicht dargestellten Vorlaufverteiler hinsichtlich einer eingangsseitigen Vorlauftemperatur $T_{Vorlauf}$ des durchfließenden Wärmeträgers. Eine weitere elektrische Leitung 9 bildet in der vorliegenden Ausführungsform eine Schnittstelle zu einem in Figur 1 nicht dargestellten Thermostat.

In der Einstellvorrichtung 1 enthaltene Berechnungsmittel 8 verarbeiten die über die Leitungen 7 und 9 erhaltenen Signale und geben an das elektrisch ansteuerbare Stellglied 6 entsprechende Befehle oder Steuersignale aus, anhand derer das Dehnstoffelement 21 im Betätigungsmittel 20 aktiviert oder deaktiviert wird. Auf diese Weise wird letztendlich ein definierter Verstellweg oder Hub des Betätigungsmittels 20 in axialer Richtung realisiert. Dabei drückt das Betätigungsmittel 20 in axialer Richtung auf einen Betätigungsstift 23 des Durchflussregelventils 2 und betätigt damit selbiges. In der vorliegenden Ausführungsform fallen die Längsachse des Betätigungsmittels 20 und des Betätigungsstiftes 23 wie auch des Durchflussregelventils 2 zusammen.

Über die axiale Betätigung des Ventilstiftes 23 wird ein in der beispielhaften Ausführungsform als Ventilteller 24 ausgebildeter Ventilkopf von einem Ventilsitz 25 abgehoben und damit eine Ventilstellung definiert, die einer bestimmten Öffnungsposition des Durchflussregelventils 2 bzw. einem bestimmten VentilÖffnungsquerschnitt entspricht.

Der jeweilige Hub des Durchflussregelventils 2 bzw. der hieraus resultierende Öffnungsquerschnitt wird über ein Positionserfassungsmittel 15 in der Einstellvorrichtung 1 erfasst. Das Positionserfassungsmittel 15 besteht in der vorliegenden Ausführungsform aus einem Magneten 16, der über einen radial nach außen ragenden Ausleger 26 dem elektrisch ansteuerbaren Stellglied 6 zugeordnet und mit dem Betätigungsmittel 20 verbunden ist. Auf diese Weise bewegt sich der Magnet 16 in axialer Richtung parallel zum Dehnstoffelement 21 bzw. parallel zum Ventilteller 24, macht mit diesen denselben Hub bzw. Verstellweg mit, und dient als Referenz für den jeweiligen Hub. Ein dem Magnet 16 gegenüber angeordneter Hallsensor 17 ist weiterer Bestandteil des Positionserfassungsmittels 15. Mit dem Hallsensor 17 wird die Position wie auch die Bewegung bzw. der Hub des Magneten 16 erfasst und hierüber der Hub des Ventiltellers 24 gegenüber des Ventilsitzes 25 erfasst bzw. letztendlich der Querschnitt des Durchflussregelventils 2 bestimmt.

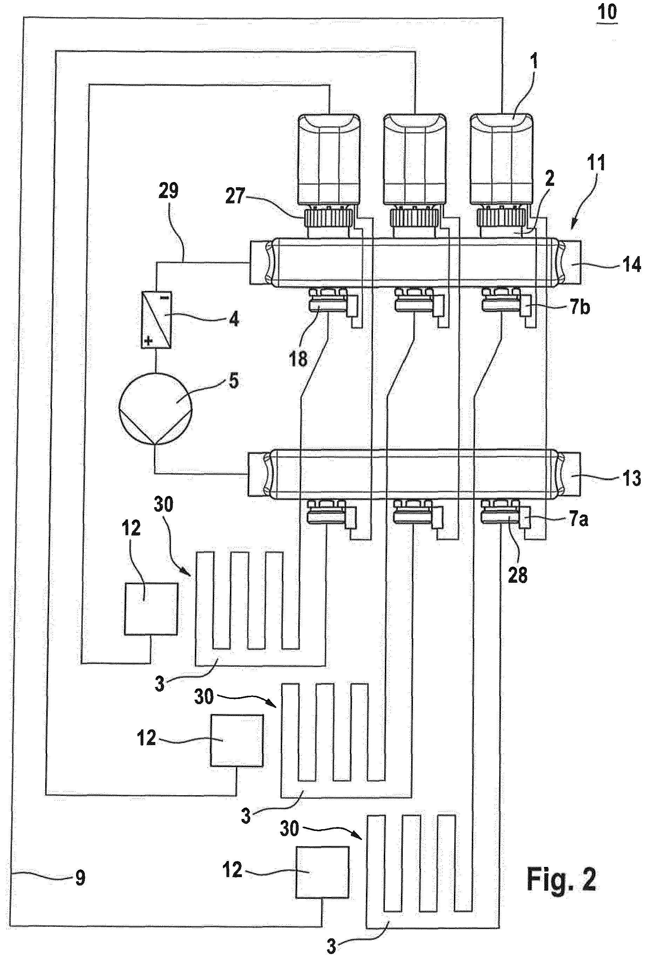

Die in Figur 1 dargestellte erfindungsgemäße Einstellvorrichtung 1 ist in mehrfacher Ausfertigung in dem in Figur 2 erläuterten erfindungsgemäßen Temperierungssystem 10 verbaut. Die beispielhafte Ausführungsform des Temperierungssystems 10 gemäß Fig. 2 enthält eine Verteilervorrichtung 11 mit drei Einstellvorrichtungen 1, die mittels jeweiligen Flansch 27 auf dem jeweils zugeordneten Durchflussregelventil 2 montiert sind. Die jeweiligen Durchflussventile 2 sind in den einen Rücklaufverteiler 14 eingebaut. Auf der gegenüberliegenden Seite der Einstellvorrichtung 1 bzw. auf der in Einbaurichtung betrachteten Unterseite des Rücklaufverteilers 14 weist dieser jeweils ein Anschlussstück 18 auf, über welches die Verbindung zur jeweiligen Verbraucherschleife 3 hergestellt ist. Dabei bildet die jeweilige Verbraucherschleife 3 einen jeweiligen Wärmetauscher 30 aus. Am Anschlussstück 18 ist jeweils ein Temperaturerfassungsmittel 7, beispielsweise ein Rücklauftemperatursensor 7b, angebracht, insbesondere angeklipst oder aufgeklebt. Mit dem Rücklauftemperatursensor 7b wird die jeweilige ausgangsseitige Rücklauftemperatur $T_{Rücklauf}$ des durch die jeweilige Verbraucherschleife 3 strömenden Wärmeträgers erfasst. Der Rücklauftemperatursensor 7b könnte auch an einer anderen geeigneten Stelle zur Erfassung der jeweiligen Rücklauftemperatur angebracht sein, beispielsweise unmittelbar nach dem Anschlussstück 18 an der Rohrwandung der linienhaft dargestellten Verbraucherschleife 3.

Das Temperierungssystem 10 weist ferner einen Vorlaufverteiler 13 auf. Der Vorlaufverteiler 13 enthält in der beispielhaften Ausführungsform drei Anschlussstücke 28 für die drei dargestellten Verbraucherschleifen 3. Ein Temperaturerfassungsmittel 7 ist abermals an jedem Anschlussstück 28 angebracht, beispielsweise ein Vorlauftemperatursensor 7a, um die jeweilige eingangsseitige Vorlauftemperatur $T_{Vorlauf}$ des durch die jeweilige Verbraucherschleife 3 strömenden Wärmeträgers zu erfassen. Der Vorlauftemperatursensor 7a könnte auch an einer anderen geeigneten Stelle zur Erfassung der jeweiligen Vorlauftemperatur angebracht sein, beispielsweise unmittelbar nach dem Anschlussstück 28 an der Rohrwandung der linienhaft dargestellten Verbraucherschleife 3.

Der Vorlaufverteiler 13 ist mit dem Rücklaufverteiler 14 über eine Leitung 29 verbunden, die eine Temperierungsquelle 4 und eine Pumpe 5 enthält. Mit der Pumpe 5 kann der flüssige Wärmeträger, der von der Temperierungsquelle 4 mit Wärmeenergie aufgeladen oder ggf. gekühlt wurde, umgewälzt werden. Der durchfließende Wärmeträger wird von der Pumpe 5 zum Vorlaufverteiler 13 transportiert, dort strömt der Wärmeträger in die hier dargestellten drei Verbraucherschleifen 3 und durch diese hindurch zum Rücklaufverteiler 14 zurück, wobei die jeweilige Durchflussmenge durch den Durchflussquerschnitt des jeweiligen Durchflussregelventils 2, die im Rücklaufverteiler 14 verbaut sind, bestimmt wird. Vom Rücklaufverteiler 14 strömt das dort zusammengefasste durchfließende Wärmeträgermedium wieder zurück zur Pumpe 5 bzw. zur Temperierungsquelle 4.

Ein der jeweiligen Verbraucherschleife 3 zugeordnetes Thermostat 12 gibt ein Ansteuerungssignal aus, wenn ein Temperierungsbedarf besteht. Das Ansteuerungssignal wird vom Thermostat 12 beispielsweise über eine Schnittstelle 9, hier ein Kabel, zur Einstellvorrichtung 1 übertragen. Die Schnittstelle 9 könnte aber auch als eine drahtlose Verbindung ausgebildet sein. Die jeweilige Einstellvorrichtung 1 bestimmt mittels der jeweiligen Berechnungsmittel 8 in Abhängigkeit vom Aktivierungssignal oder Deaktivierungssignal des jeweiligen Thermostaten 12 und den jeweils zugeordneten Signalen bzw. Daten der Vorlauf- und der Rücklauftemperatur den jeweiligen Öffnungsquerschnitt des jeweiligen Durchflussregelventils 2.

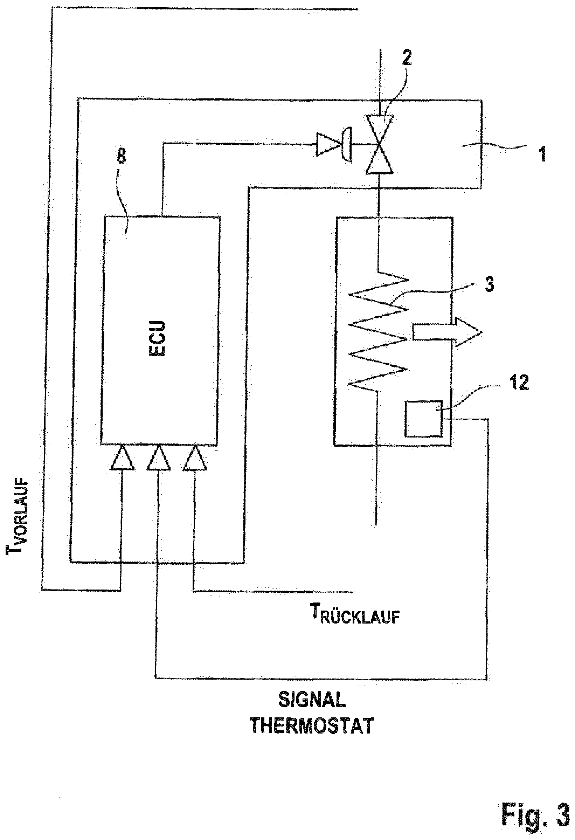

Die im Temperierungssystem 10 gemäß Figur 2 verbauten Einstellvorrichtungen 1 gemäß Fig. 1 sind in Fig. 3 noch einmal in einem Blockschaltbild, das die Systemkomponenten zur erfindungsgemäßen Selbstregulierung darstellt, veranschaulicht.

Wärme oder Kälte werden von der Verbraucherschleife 3 an die Umgebung abgegeben. Ein Thermostat 12, insbesondere ein Raumthermostat in einem Wohnraum eines Gebäudes, gibt ein Signal aus. Das Signal vom Thermostat 12 wird einer ECU der Einstellvorrichtung 1 übergeben. Die ECU erhält ferner Temperatursignale bzw. Daten, wie beispielsweise die Rücklauftemperatur $T_{Rücklauf}$ und die Vorlauftemperatur $T_{Vorlauf}$. Ein Berechnungsmittel 8, das die ECU enthält, ist dazu eingerichtet, eine elektrische Ansteuerung des hier nicht näher dargestellten Stellgliedes 6 der Einstellvorrichtung 1 vorzunehmen, um einen Hub des Ventils zu realisieren, bzw. die einer einem bestimmten Durchflussquerschnitt zugeordnete, vorbestimmte Öffnungsposition des Durchflussregelventils 2 einzustellen.

Der Öffnungsquerschnitt des Ventils 2 bzw. dessen Hub wird basierend auf einer Regeldifferenz $\Delta T_{Regeldifferenz}$ berechnet, wobei die zu berechnende Regeldifferenz $\Delta T_{Regeldifferenz}$ zwischen einer Temperaturdifferenz $\Delta T_{Ist}$ aus der erfassten eingangsseitigen Vorlauftemperatur $T_{Vorlauf}$ und der ausgangsseitigen Rücklauftemperatur $T_{Rücklauf}$ und einer vorbestimmten Temperaturspreizung $\Delta T_{Soll}$ von der ausgangsseitigen Rücklauftemperatur $T_{Rücklauf}$ zu der eingangsseitigen Vorlauftemperatur $T_{Vorlauf}$ gebildet wird.

Die Einstellvorrichtung 1 umfasst ferner ein hier nicht weiter dargestelltes Zeiterfassungsmittel und ein Speichermittel, die dazu eingerichtet sind, eine vorangegangene oder aktuelle Aktivierungsdauer des Aktivierungssignals vom Thermostat 12 und/oder eine Deaktivierungsdauer zwischen zwei Aktivierungen oder Deaktivierungen zu erfassen und zu speichern, wobei das Berechnungsmittel 8 mit der darin enthaltenen ECU dazu eingerichtet ist, die Temperaturspreizung $\Delta T_{Soll}$ basierend auf einer Aktivierungsdauer und/oder einer Deaktivierungsdauer variabel zu bestimmen.

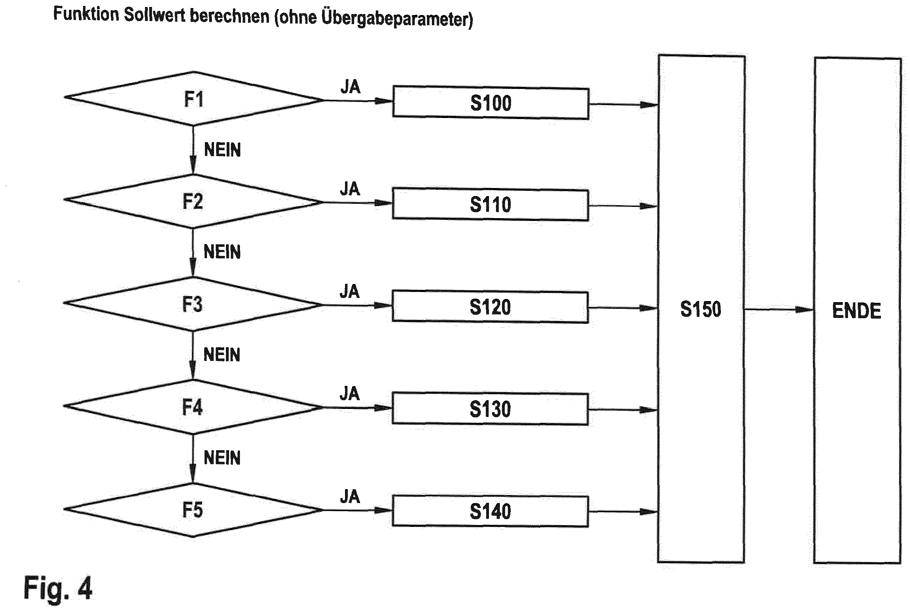

In Fig. 4 ist ein Flussdiagramm dargestellt, das Schritte für eine Bestimmung der Temperaturspreizung $\Delta T_{Soll}$ in der erfindungsgemäßen Selbstregulierung darstellt.

In Funktion F1 wird geprüft ob die Heizdauer $\Delta t_{Heiz}$ kleiner einer vorbestimmten Zeit $\Delta t_{Soll}$ ist, beispielsweise eine halbe Stunde. Mit anderen Worten: Es wird geprüft, ob $\Delta t_{Heiz} < \Delta t_{Soll}$ mit $\Delta t_{Soll} = \frac{1}{2} h$. Ist dies der Fall, d.h., die Antwort ist "Ja", so wird in Schritt S100 der Sollwert $\Delta T_{Soll}$ um zwei Kelvin bzw. zwei Grad erhöht. Ist dem nicht der Fall, d.h., die Antwort ist "Nein", geht es weiter mit Funktion F2.

In Funktion F2 wird geprüft, ob die Heizdauer kleiner einer Stunde ist. Es wird also geprüft, ob $\Delta t_{Heiz} < \Delta t_{Soll}$ mit $\Delta t_{Soll} = 1h$. Ist dies der Fall, d.h., die Antwort ist "Ja", so wird im Schritt S110 der Sollwert $\Delta T_{Soll}$ um ein Kelvin bzw. ein Grad erhöht. Ist dem nicht der Fall, d.h., die Antwort ist "Nein", geht es weiter mit Funktion F3.

In Funktion F3 wird prüft, ob die Heizdauer kleiner zwei Stunden ist. Es wird also geprüft, ob $\Delta t_{Heiz} < \Delta t_{Soll}$ mit $\Delta t_{Soll}$ = 2h. Ist dem der Fall, d.h., die Antwort ist "Ja", so wird der Sollwert $\Delta T_{Soll}$ in Schritt S120 um 0,5 Kelvin bzw. 0,5 Grad erhöht. Ist dem nicht der Fall, d.h., die Antwort ist "Nein", schreitet die Routine mit Funktion F4 fort.

In Funktion F4 wird geprüft, ob die Heizdauer größer drei Stunden ist. Es wird also geprüft, ob $\Delta t_{Heiz} > \Delta t_{Soll}$ mit $\Delta t_{Soll}$ = 3h. Ist dem der Fall, d.h., die Antwort ist "Ja", wird der Sollwert $\Delta T_{Soll}$ in Schritt S130 um ein Kelvin bzw. ein Grad verringert. Ist dem nicht der Fall, d.h., die Antwort ist "Nein", schreitet die Routine mit Funktion F5 fort.

In Funktion F5 wird geprüft, ob die Heizdauer größer vier Stunden ist. Es wird also geprüft, ob $\Delta t_{Heiz} > \Delta t_{Soll}$ mit $\Delta t_{Soll}$ = 4h. Ist dem der Fall, d.h., die Antwort ist "Ja", wird in Schritt S140 der Sollwert $\Delta T_{Soll}$ um drei Kelvin bzw. drei Grad verringert.

Im Schritt S150, der sich an die an die Schritte S100 bis S140 anschließt, werden die möglichen Werte des Sollwerts $\Delta T_{Soll}$ begrenzt, und zwar auf ein Temperaturspreizungsprofil zwischen fünf bis fünfzehn Kelvin bzw. fünf bis fünfzehn Grad.

Danach endet die Routine.

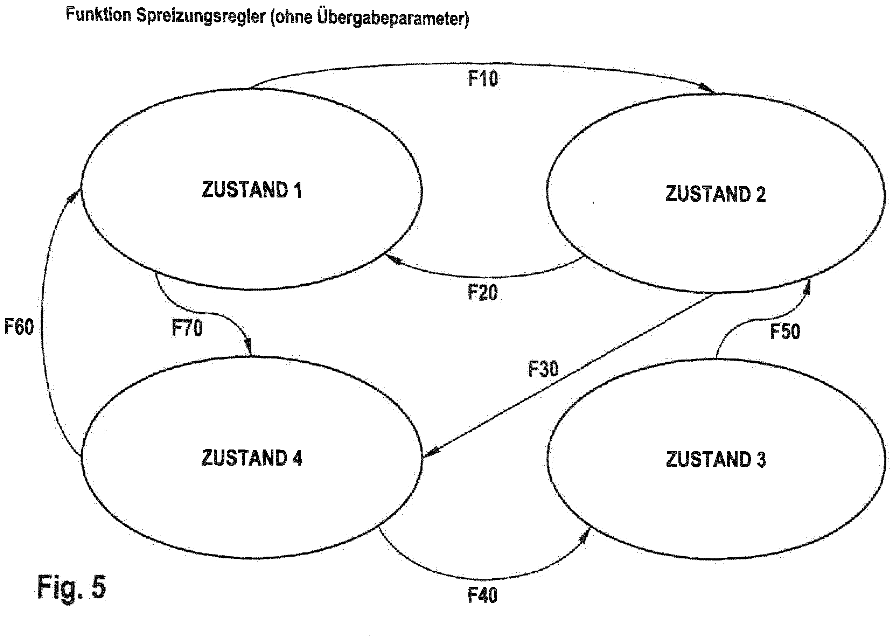

In Fig. 5 ist ein Zustandsautomat zur Darstellung von logischen Verknüpfungen in der erfindungsgemäßen Selbstregulierung erläutert.

Im Zustand 1 wird die Ventilposition des Durchflussregelventils 2 geregelt. Es wird die Ist- Spreizung dT_Ist bzw. $\Delta T_{Ist}$ berechnet beziehungsweise bestimmt. Ferner wird die Differenz dT_diff bzw. $\Delta T_{Regeldifferenz}$ aus Sollspreizung dT_Soll bzw. $\Delta T_{Soll}$ und Ist-Spreizung dT_Ist bzw. $\Delta T_{Ist}$ berechnet. Es wird der Ventilöffnungsquerschnitt, der Ventilhub oder der Ventilweg sV berechnet, selbige beispielsweise über einen PID-Regler, insbesondere über einen I-Regler, einreguliert, und der Ventilweg wird begrenzt, beispielsweise auf ein Minimum von 10 Prozent. Dies hat den Vorteil, dass unerwünschte Strömungsgeräusche minimiert werden. Ferner wird die Heizdauer im Reglertakt, der beispielsweise auf 10 Sekunden eingestellt ist, berechnet.

Im Zustand 2 wird die Ventilposition gehalten. Dabei wird die Ist-Spreizung dT_Ist bzw. $\Delta T_{Ist}$ berechnet. Die Zeitdauer bzw. Aktivierungsdauer wird im Reglertakt gezählt. Der Reglertakt beträgt beispielsweise 10 Sekunden. Die Heizdauer wird ebenfalls im Reglertakt von 10 Sekunden berechnet. Wenn der Zustand 2 verlassen wird, wird eine Aktion ausgeführt, mit Hilfe der die Zeitdauer genullt wird bzw. auf Null gestellt wird.

Der Reglertakt kann auf ganzzahlige Sekunden zwischen 1 Sekunde und 30 Sekunden eingestellt sein, vorzugsweise wird dieser auf 5 bis 15 Sekunden eingestellt, besonders bevorzug auf 10 Sekunden.

Im Zustand 3 wird das Ventil geschlossen. Der Ventilweg sV wird gleich Null gesetzt.

Im Zustand 4 wird die Sollspreizung berechnet. Der Sollwert dT_Soll bzw. $\Delta T_{Soll}$ wird berechnet und die Heizdauer wird danach genullt bzw. auf Null zurückgestellt.

Zustand 1 ist in Richtung Zustand 2 über die Funktion F10 verknüpft. In der Funktion F10 wird geprüft, ob die Regeldifferenz $\Delta T_{Regeldifferenz}$, also der Betrag der Differenz $\Delta T_{Soll}$ minus $\Delta T_{Ist}$ bzw. aus dT_Soll - dT_Ist kleiner ist als dT_diff_Max, d.h. es wird geprüft, ob $|dTSoll - dTIst| < dT\_Diff\_Max$. Mit anderen Worten: Es wird geprüft, ob die Regeldifferenz $\Delta T_{Regeldifferenz}$ innerhalb einer maximal zulässigen Regedifferenz $\Delta T_{Regeldifferenz-Max}$ liegt.

Zustand 2 ist in Richtung Zustand 1 über die Funktion F20 verknüpft. In Funktion F20 wird geprüft, ob der Betrag auch aus dT_Soll - dT_Ist größer ist als zweimal dT_diff_Max und zugleich die Zeitdauer größer gleich 10 Minuten ist, d.h., es wird geprüft ob $|dTSoll - dTIst| > 2 * dT\_diff\_Max\ UND\ Zeitdauer \geq 10\ Minuten.$

Zustand 2 ist in Richtung Zustand 4 über die Funktion F30 verknüpft in der Funktion F30 wird geprüft, ob RT identisch 0 oder ob die Heizdauer größer als 4 Stunden ist, d.h. es wird geprüft, ob $RT == 0\ ODER\ Heizdauer > 4\ h.$

Zustand 4 ist in Richtung Zustand 3 über die Funktion F40 verknüpft. In der Funktion F40 wird geprüft, ob RT identisch 0 ist, d.h. es wird geprüft ob $RT == 0$.

Dabei steht RT abermals stellvertretend für das Ansteuersignal vom Raumthermostat.

Zustand 3 ist wiederum Richtung Zustand 2 über die Funktion F50 verknüpft. Hierbei wird geprüft, ob RT identisch 1 ist, d.h. es wird geprüft, ob $RT == 1$. In anderen Worten, in Funktion 50 wird festgesellt, ob der Raumthermostat ein Ansteuerungssignal bzw. Aktivierungssignal absetzt.

Zustand 4 ist in Richtung Zustand 1 über die Funktion F60 verknüpft. In der Funktion F60 wird geprüft, ob RT identisch 1 ist, d.h. es wird geprüft, ob $RT == 1$ bzw. ob der Raumthermostat ein Aktivierungssignal absetzt.

Zustand 1 ist in Richtung Zustand 4 über Funktion F70 verknüpft. In der Funktion F70 wird geprüft, ob die Heizdauer größer 4 Stunden ist, d.h. es wird geprüft ob $Heizdauer > 4\ h.$

Die hier beispielshaft mit 4 Stunden angegebene Heizdauer kann auch auf einen geeigneten Wert von 2 bis 6 Stunden, beispielweise 3, 4 oder 5 Stunden festgelegt sein.

Die vorliegende Erfindung schafft damit erstmals eine Einstellvorrichtung 1 zur selbstregulierenden Einstellung eines Durchflussregelventils 2 einer Verbraucherschleife 3 mit Wärmetauscher 30, insbesondere in einem Temperierungssystem 10 für Gebäude mit einer Temperierungsquelle 4, einem flüssigen Wärmeträger und einer Pumpe 5.

Ferner stellt die Erfindung erstmals eine Verteilervorrichtung 11 zur Verfügung zur selbstregulierenden Verteilung eines flüssigen Wärmeträgers auf wenigstens zwei oder mehr Verbraucherschleifen 3 mit Wärmetauscher 30, die jeweils ein Durchflussregelventil 2 umfassen, in einem Temperierungssystem 10 mit einer Temperierungsquelle 4 und einer Pumpe 5, wobei die Verteilervorrichtung 11 einen Vorlaufverteiler 13 und einen Rücklaufverteiler 14 aufweist. An diesen sind die Verbraucherschleifen 3 eingangsseitig und ausgangsseitig zusammengeführt, wobei die Durchflussventile 2 an dem Vorlaufverteiler 13 oder dem Rücklaufverteiler 14 angeordnet sind.

Schließlich schlägt die Erfindung erstmals hierfür geeignete Verfahren vor.

In den vorstehend diskutierten Figuren 1 bis 5 wurden die nachfolgend zusammenfassend aufgelisteten Bezugszeichen verwendet, wobei diese Auflistung keinen Anspruch auf Vollständigkeit erhebt:

| | |
|---|---|
| 1 | Einstellvorrichtung; |
| 2 | Durchflussregelventil; |
| 3 | Verbraucherschleife; |
| 4 | Temperierungsquelle; |
| 5 | Pumpe; |
| 6 | elektrisch ansteuerbares Stellglied; |
| 7 | Temperaturerfassungsmittel; |
| 7a | Vorlauftemperatursensor; |
| 7b | Rücklauftemperatursensor; |
| 8 | Berechnungsmittel; |
| 9 | Schnittstelle; |
| 10 | Temperierungssystem; |
| 11 | Verteilervorrichtung; |
| 12 | Thermostat, |
| 13 | Vorlaufverteiler; |
| 14 | Rücklaufverteiler; |
| 15 | Positionserfassungsmittel; |
| 16 | Magnet; |
| 17 | Hallsensor; |
| 18 | Anschlussstück; |
| 20 | Betätigungsmittel; |
| 21 | Dehnstoffelement, insbesondere Wachspatrone; |
| 22 | Spiralfeder; |
| 23 | Ventilstift; |
| 24 | Ventilteller; |
| 25 | Ventilsitz; |
| 26 | Ausleger; |
| 27 | Flansch; |
| 28 | Anschlussstück; |
| 29 | Leitung; |
| 30 | Wärmetauscher; |

| | |
|---|---|
| $T_{Vorlauf}$ | eingangsseitige Vorlauftemperatur des durchfließenden Wärmeträgers; |
| $T_{Rücklauf}$ | ausgangsseitige Rücklauftemperatur des durchfließenden Wärmeträgers; |
| $\Delta T_{Ist}$ | Temperaturdifferenz ; |
| $\Delta T_{Soll}$ | Temperaturspreizung; |
| $\Delta T_{Regeldifferenz}$ | Temperatur-Regeldifferenz; |
| $T_{Raum-Soll}$ | vorgebbare Raumtemperatur; |

$T_{Raum-Ist}$      tatsächliche Raumtemperatur;

**Patentansprüche**

1. Einstellvorrichtung (1) zur selbstregulierenden Einstellung eines Durchflussregelventils (2) einer Verbraucherschleife (3) mit Wärmetauscher (30), in einem Temperierungssystem (10) für Räume in einem Gebäude mit einer Temperierungsquelle (4), einem flüssigen Wärmeträger und einer Pumpe (5), wobei die Einstellvorrichtung (1) aufweist:

   ein elektrisch ansteuerbares Stellglied (6), das mit dem Durchflussregelventil (2) derart koppelbar eingerichtet ist, dass eine Öffnungsposition des Durchflussregelventils (2) zwischen einer geschlossenen Position und einer geöffneten Position, graduell oder schrittweise, durch die Einstellvorrichtung (1) einstellbar und erfassbar ist;
   Temperaturerfassungsmittel (7), die eine bezüglich der Verbraucherschleife (3) eingangsseitige Vorlauftemperatur ($T_{Vorlauf}$) und eine ausgangsseitige Rücklauftemperatur ($T_{Rücklauf}$) des durchfließenden Wärmeträgers erfassen;
   ein Berechnungsmittel (8), das dazu eingerichtet ist, eine elektrische Ansteuerung des Stellglieds (6), die einer - einem bestimmten Durchflussquerschnitt zugeordneten - vorbestimmten Öffnungsposition des Durchflussregelventils (2) entspricht, basierend auf einer Regeldifferenz ($\Delta T_{Regeldifferenz}$) zu berechnen, wobei die zu berechnende Regeldifferenz ($\Delta T_{Regeldifferenz}$) gebildet wird
   zwischen einer Temperaturdifferenz ($\Delta T_{Ist}$) aus der von den Temperaturerfassungsmitteln (7) erfassten eingangsseitigen Vorlauftemperatur ($T_{Vorlauf}$) und ausgangsseitigen Rücklauftemperatur ($T_{Rücklauf}$), und einer von dem Berechnungsmittel (8) vorbestimmten Temperaturspreizung ($\Delta T_{Soll}$) von der ausgangsseitigen Rücklauftemperatur ($T_{Rücklauf}$) zu der eingangsseitigen Vorlauftemperatur ($T_{Vorlauf}$), also der Betrag der Differenz $\Delta T_{Soll}$ minus $\Delta T_{Ist}$;
   eine Schnittstelle (9) zum Empfangen eines externen Aktivierungssignals zur Aktivierung des Berechnungsmittels (8) und/oder der Einstellvorrichtung (1);
   **dadurch gekennzeichnet, dass**
   die Einstellvorrichtung (1) ein Zeiterfassungsmittel und ein Speichermittel umfasst, die dazu eingerichtet sind, eine vorangegangene oder aktuelle Aktivierungsdauer des Aktivierungssignals und/oder eine Deaktivierungsdauer zwischen zwei Aktivierungen zu erfassen und zu speichern; und
   das Berechnungsmittel (8) dazu eingerichtet ist,

die Temperaturspreizung ($\Delta T_{Soll}$) basierend auf der Aktivierungsdauer und/oder der Deaktivierungsdauer variabel zu bestimmen.

2. Einstellvorrichtung (1) zur selbstregulierenden Einstellung eines Durchflussregelventils (2) einer Verbraucherschleife (3) nach Anspruch 1, **dadurch gekennzeichnet, dass**
   die Einstellvorrichtung (1) dazu eingerichtet ist, während einer Aktivierungsdauer die durch das Berechnungsmittel (8) berechnete elektrische Ansteuerung an das Stellglied (6) auszugeben, und während einer Deaktivierungsdauer keine elektrische Ansteuerung oder eine vorbestimmte elektrische Ansteuerung, die der geschlossenen Position des Durchflussregelventils entspricht, an das Stellglied (6) auszugeben.

3. Einstellvorrichtung (1) zur selbstregulierenden Einstellung eines Durchflussregelventils (2) einer Verbraucherschleife (3) nach Anspruch 1 oder 2, **dadurch gekennzeichnet, dass**
   die Einstellvorrichtung (1) dazu eingerichtet ist, während einer Deaktivierungsdauer eine elektrische Leistungszufuhr zu dem Berechnungsmittel (8) und/oder zu der Einstellvorrichtung (1) auszuschalten.

4. Einstellvorrichtung (1) zur selbstregulierenden Einstellung eines Durchflussregelventils (2) einer Verbraucherschleife (3) nach einem der Ansprüche 1 bis 3, **dadurch gekennzeichnet, dass**
   das Berechnungsmittel (8) dazu eingerichtet ist, zumindest einen Wert einer vorangegangenen Öffnungsposition des Durchflussregelventils (2) in dem Speichermittel zu speichern.

5. Einstellvorrichtung (1) zur selbstregulierenden Einstellung eines Durchflussregelventils (2) einer Verbraucherschleife (3) nach einem der Ansprüche 1 bis 4, **dadurch gekennzeichnet, dass**
   das Speichermittel einen vorab gespeicherten Referenzwert für die Aktivierungsdauer und/oder einen vorab gespeicherten Referenzwert für die Deaktivierungsdauer enthält.

6. Einstellvorrichtung (1) zur selbstregulierenden Einstellung eines Durchflussregelventils (2) einer Verbraucherschleife (3) nach einem der Ansprüche 1 bis 5, **dadurch gekennzeichnet, dass**
   das Speichermittel einen vorab gespeicherten Wertebereich für die Temperaturspreizung enthält.

7. Einstellvorrichtung (1) zur selbstregulierenden Einstellung eines Durchflussregelventils (2) einer Verbraucherschleife (3) nach einem der Ansprüche 1 bis 6, **dadurch gekennzeichnet, dass**
   das Speichermittel ein vorab gespeichertes Kennfeld mit zugeordneten Werten von Aktivierungsdauern und/oder Deaktivierungsdauern und vorgegebenen Temperaturspreizungen ($\Delta T_{Soll}$) zur Bestimmung der Temperaturspreizung ($\Delta T_{Soll}$) enthält.

8. Einstellvorrichtung (1) zur selbstregulierenden Einstellung eines Durchflussregelventils (2) einer Verbraucherschleife (3) nach einem der Ansprüche 1 bis 7, **dadurch gekennzeichnet, dass** das Speichermittel eine vorab gespeicherte Steuerungslogik zur Bestimmung der Temperaturspreizung ($\Delta T_{Soll}$) enthält.

9. Einstellvorrichtung (1) zur selbstregulierenden Einstellung eines Durchflussregelventils (2) einer Verbraucherschleife (3) nach einem der Ansprüche 1 bis 8, **dadurch gekennzeichnet, dass** die Einstellvorrichtung (1) dazu eingerichtet ist, die Temperaturspreizung ($\Delta T_{Soll}$) in Abhängigkeit der Vorlauftemperatur ($T_{Vorlauf}$) zu verändern, und/oder die Einstellvorrichtung (1) dazu eingerichtet ist, eine Bandbreite der Temperaturspreizung ($\Delta T_{Soll}$) in Abhängigkeit der Vorlauftemperatur ($T_{Vorlauf}$) zu verändern, und/oder die Einstellvorrichtung (1) dazu eingerichtet ist, über die Schnittstelle (9) weitere externe Signale mit Betriebsparametern aus dem Temperierungssystem (10) zu empfangen; und das Berechnungsmittel (8) dazu eingerichtet ist, die Temperaturspreizung ($\Delta T_{Soll}$) in Abhängigkeit der Betriebsparameter anzupassen.

10. Temperierungssystem (10) zum selbstregulierenden Temperieren von Räumen eines Gebäudes mit einer Temperierungsquelle (4), wenigstens einer Verbraucherschleife (3) mit Wärmetauscher (30), die ein Durchflussregelventil (2) umfasst, sowie einem flüssigen Wärmeträger und einer Pumpe (5), aufweisend:

    wenigstens ein Thermostat (12), das in einem Raum angeordnet ist, mit einem Eingabemittel zur Eingabe eines Wertes, der für eine vorgebbare Raumtemperatur ($T_{Raum-Soll}$) bezeichnend ist, und einer Schnittstelle (9) zum Ausgeben eines Aktivierungssignals für wenigstens eine Verbraucherschleife (3) in dem Raum; wobei das Thermostat (12) dazu eingerichtet ist, auf eine tatsächliche Raumtemperatur ($T_{Raum-Ist}$) anzusprechen, indem das Thermostat (12) das Aktivierungssignal ausgibt, solange eine Abweichungstoleranz zwischen der vorgebbaren Raumtemperatur ($T_{Raum-Soll}$) und der tatsächlichen Raumtemperatur ($T_{Raum-Ist}$) überschritten wird;
    **dadurch gekennzeichnet, dass** das Temperierungssystem (10) für die wenigstens eine Verbraucherschleife (3) jeweils eine Einstellvorrichtung (1) nach einem der Ansprüche 1 bis 9 aufweist, die mit dem Durchflussregelventil (2) der Verbraucherschleife (3) in Wirkverbindung steht, und der ein Aktivierungssignal oder Deaktivierungssignal von dem Thermostat (12) zugeordnet ist, das mit der Verbraucherschleife (3) in demselben Raum angeordnet ist.

11. Temperierungssystem (10) zum selbstregulierenden Temperieren von Räumen eines Gebäudes nach Anspruch 10, **dadurch gekennzeichnet, dass** in einem Raum des Gebäudes das Thermostat (12) und zwei oder mehr Verbraucherschleifen (3) angeordnet sind.

12. Temperierungssystem (10) zum selbstregulierenden Temperieren von Räumen eines Gebäudes nach Anspruch 10 oder 11, **dadurch gekennzeichnet, dass** das Thermostat (12) ein Bimetall-Element aufweist, das auf die tatsächliche Raumtemperatur ($T_{Raum-Ist}$) anspricht und eine Ausgabe des Aktivierungssignals oder des Deaktivierungssignals betätigt.

13. Temperierungssystem zum selbstregulierenden Temperieren von Räumen eines Gebäudes nach einem der Ansprüche 10 bis 12, **dadurch gekennzeichnet, dass** das Aktivierungssignal oder Deaktivierungssignal ein binäres Signal ist, das einen Einschaltzustand mit einem Signalpegel oberhalb eines vorbestimmen Pegelwertes und einen Ausschaltzustand ohne Signalpegel oder einem Signalpegel unterhalb des vorbestimmen Pegelwertes umfasst.

14. Temperierungssystem zum selbstregulierenden Temperieren von Räumen eines Gebäudes nach einem der Ansprüche 10 bis 13, **dadurch gekennzeichnet, dass** das Thermostat (12) einen Mikrocomputer und einen Temperatursensor zur Erfassung der tatsächlichen Raumtemperatur ($T_{Raum-Ist}$) umfasst; wobei das Thermostat (12) einen Verlauf der tatsächlichen Raumtemperatur ($T_{Raum-Ist}$) erfasst und speichert, während und/oder nachdem das Aktivierungssignal oder das Deaktivierungssignal ausgegeben wird; und das Thermostat (12) und die Einstellvorrichtung (1) dazu eingerichtet sind, Daten zu einem Verlauf erfasster tatsächlicher Raumtemperaturen ($T_{Raum-Ist}$) zu kommunizieren.

15. Temperierungssystem zum selbstregulierenden Temperieren von Räumen eines Gebäudes nach einem der Ansprüche 10 bis 14, **dadurch gekennzeichnet, dass** das Aktivierungssignal und/oder das Deaktivierungssignal mittels drahtlosen Schnittstellen (9) von dem Thermostat (12) zu der zugeordneten Einstellvorrichtung (1) kommuniziert wird.

16. Verteilervorrichtung (11) zur selbstregulierenden Verteilung eines flüssigen Wärmeträgers auf wenigstens zwei oder mehr Verbraucherschleifen (3) mit Wärmetauscher (30), die jeweils ein Durchflussregelventil (2) umfassen, in einem Temperierungssystem (10) mit einer Temperierungsquelle (4) und einer Pumpe (5), aufweisend:

einen Vorlaufverteiler (13) und einen Rücklaufverteiler (14), an denen die Verbraucherschleifen (3) eingangsseitig und ausgangsseitig zusammengeführt sind, wobei die Durchflussregelventile (2) an dem Vorlaufverteiler (13) oder dem Rücklaufverteiler (14) angeordnet sind; **dadurch gekennzeichnet, dass** die Verteilervorrichtung (11) zu jedem Durchflussregelventil (2) eine Einstellvorrichtung (1) nach einem der Ansprüche 1 bis 9 zur selbstregulierenden Einstellung der Verbraucherschleifen (3)aufweist.

17. Verfahren zur selbstregulierenden Einstellung eines Durchflusses eines flüssigen Wärmeträgers durch eine Verbraucherschleife (3) mit Wärmetauscher (30) in einem Temperierungssystem (10) für Gebäude mit einer Temperierungsquelle (4) und einer Pumpe (5);
wobei das Verfahren zumindest die folgenden Schritte aufweist:

a) Erfassen einer eingangsseitigen Vorlauftemperatur ($T_{Vorlauf}$) und einer ausgangsseitigen Rücklauftemperatur ($T_{Rücklauf}$) des durchlaufenden Wärmeträgers an der Verbraucherschleife (3);
b) Berechnen einer Regeldifferenz ($\Delta T_{Regeldifferenz}$) zwischen einer Temperaturdifferenz ($\Delta T_{Ist}$) aus der erfassten eingangsseitigen Vorlauftemperatur ($T_{Vorlauf}$) und der ausgangsseitigen Rücklauftemperatur ($T_{Rücklauf}$), sowie einer vorbestimmten Temperaturspreizung ($\Delta T_{Soll}$), also dem Betrag der Differenz $\Delta T_{Soll}$ minus $\Delta T_{Ist}$;
c) Berechnen und Einstellen eines verstellbaren Durchflussquerschnitts in der Verbraucherschleife (3) basierend auf der Regeldifferenz ($\Delta T_{Regeldifferenz}$);

**gekennzeichnet durch** die Schritte:

d) Erfassen einer vorangegangenen oder aktuellen Aktivierungsdauer und/oder einer Deaktivierungsdauer der Verbraucherschleife (3); und
e) Bestimmen der variablen Temperaturspreizung ($\Delta T_{Soll}$) von der ausgangsseitigen Rücklauftemperatur ($T_{Rücklauf}$) zu der eingangsseitigen Vorlauftemperatur ($T_{Vorlauf}$) basierend auf der Aktivierungsdauer und/oder der Deaktivierungsdauer.

18. Verfahren zur selbstregulierenden Einstellung eines Durchflusses eines flüssigen Wärmeträgers durch eine Verbraucherschleife (3) nach Anspruch 17, **dadurch gekennzeichnet, dass**
eine kleinere Temperaturspreizung ($\Delta T_{Soll}$) bestimmt wird, wenn zumindest eine vorangegangene Aktivierungsdauer oder Deaktivierungsdauer größer als ein Referenzwert ist, oder
eine größere Temperaturspreizung ($\Delta T_{Soll}$) bestimmt wird, wenn zumindest eine vorangegangene Aktivierungsdauer oder Deaktivierungsdauer kleiner als der Referenzwert ist.

19. Verfahren zur selbstregulierenden Einstellung eines Durchflusses eines flüssigen Wärmeträgers durch eine Verbraucherschleife (3) nach Anspruch 17 oder 18, **dadurch gekennzeichnet, dass**
die Temperaturspreizung ($\Delta T_{Soll}$) basierend auf einem Verlauf aufeinander folgender, vorangegangener Aktivierungsdauern und/oder Deaktivierungsdauern bestimmt wird.

20. Verfahren zur selbstregulierenden Verteilung eines flüssigen Wärmeträgers auf wenigstens zwei oder mehr Verbraucherschleifen (3) mit Wärmetauscher in einem Temperierungssystem (10) für Gebäude mit einer Temperierungsquelle (4) und einer Pumpe (5);
**dadurch gekennzeichnet, dass**
für jede Verbraucherschleife (3) das Verfahren zur selbstregulierenden Einstellung eines Durchflusses eines flüssigen Wärmeträgers durch eine extern aktivierbare Verbraucherschleife (3) nach einem der Ansprüche 17 bis 19 durchgeführt wird.

21. Einstellvorrichtung (1) zur selbstregulierenden Einstellung eines Durchflussregelventils (2) nach einem der Ansprüche 1 bis 9, wobei die Einstellvorrichtung (1) ferner aufweist:
ein Positionserfassungsmittel (15), das derart ausgebildet ist, eine aktuelle Position des Stellglieds (6) zu erfassen.

22. Einstellvorrichtung (1) zur selbstregulierenden Einstellung eines Durchflussregelventils (2) nach Anspruch 21, **dadurch gekennzeichnet, dass**
das Positionserfassungsmittel (15) aus einem Magneten (16) und einem dem Magneten (16) zugeordneten Hallsensor (17) gebildet ist.

**Claims**

1. An adjustment device (1) for the self-regulating adjustment of a flow control valve (2) of a consumer loop (3) with heat exchanger (30) in a temperature control system (10) for rooms in a building, having a temperature control source (4), a liquid heat carrier and a pump (5), wherein the adjustment device (1) comprises:

an electrically controllable actuator (6) configured to be coupled to the flow control valve (2) in such a way that an opening position of the flow control valve (2) can be adjusted and detected, gradually or stepwise, between a closed position and an open position by the adjustment device (1);
temperature detection means (7) which detect a flow temperature ($T_{flow}$) on the input side and a return temperature ($T_{return\ flow}$) on the output side with respect to the consumer loop (3) of the heat carrier flowing through;
calculation means (8) configured to calculate an electric trigger of the actuator (6), which corresponds to a predetermined opening position of the flow control valve (2) - associated with a specific flow cross-section - based on a control difference ($\Delta T_{control\ difference}$), wherein the control difference ($\Delta T_{control}$ difference) to be calculated is formed between
a temperature difference ($\Delta T_{actual}$) from the input-side flow temperature ($T_{flow}$) and the output-side return flow temperature ($T_{return\ flow}$) detected by the temperature detection means (7), and a temperature spread ($\Delta T_{taget}$) from the output-side return flow temperature ($T_{return\ flow}$) to the input-side flow temperature ($T_{flow}$) that is predetermined by the calculation means (8), that is the absolute value of the difference $\Delta T_{target}$ minus $\Delta T_{actual}$;
an interface (9) for receiving an external activation signal for activating the calculation means (8) and/or the adjustment device (1);
**characterized in that,**
said adjustment device (1) comprises time detection means and storage means configured to detect and store a previous or current activation period of said activation signal and/or a deactivation period between two activations; and
the calculation means (8) is configured to variably determine the temperature spread ($\Delta T_{taget}$) based on the activation duration and/or the deactivation duration.

2. The adjustment device (1) for the self-regulating adjustment of a flow control valve (2) of a consumer loop (3) according to claim 1, **characterized in that** the adjustment device (1) is configured to output the electric trigger calculated by the calculating means (8) to the actuator (6) during an activation period, and to output no electric trigger or a predetermined electric trigger corresponding to the closed position of the flow control valve (2) to the actuator (6) during a deactivation period.

3. The adjustment device (1) for the self-regulating adjustment of a flow control valve (2) of a consumer loop (3) according to claim 1 or 2, **characterized in that** the adjustment device (1) is configured to switch off supply of electric power to the calculating means (8) and/or to the adjustment device (1) during a deactivation period.

4. The adjustment device (1) for the self-regulating adjustment of a flow control valve (2) of a consumer loop (3) according to any one of claims 1 to 3, **characterized in that** said calculation means (8) is configured to store at least one value of a previous opening position of said flow control valve (2) in said storage means.

5. The adjustment device (1) for the self-regulating adjustment of a flow control valve (2) of a consumer loop (3) according to any one of claims 1 to 4, **characterized in that** the storage means contains a pre-stored reference value for the activation duration and/or a pre-stored reference value for the deactivation duration.

6. The adjustment device (1) for the self-regulating adjustment of a flow control valve (2) of a consumer loop (3) according to one of claims 1 to 5, **characterized in that** the storage means contains a previously stored value range for the temperature spread.

7. The adjustment device (1) for the self-regulating adjustment of a flow control valve (2) of a consumer loop (3) according to any one of claims 1 to 6, **characterized in that** the storage means contains a previously stored map with associated values of activation durations and/or deactivation durations and predetermined temperature spreads ($\Delta T_{taget}$) for determining the temperature spread ($\Delta T_{target}$).

8. The adjustment device (1) for the self-regulating adjustment of a flow control valve (2) of a consumer loop (3) according to any one of the claims 1 to 7, **characterized in that** the storage means contains a pre-stored control logic for determining the temperature spread ($\Delta T_{target}$).

9. The adjustment device (1) for the self-regulating adjustment of a flow control valve (2) of a consumer loop (3) according to any one of claims 1 to 8, **characterized in that**
the adjustment device (1) is configured to change the temperature spread ($\Delta T_{taget}$) depending on the flow temperature ($T_{flow}$), and/or
the adjustment device (1) is configured to change a bandwidth of the temperature spread ($\Delta T_{taget}$) depending on the flow temperature ($T_{flow}$), and/or
the adjustment device (1) is configured to receive, via the interface (9), further external signals with operating parameters from the temperature control system (10); and the calculation means (8) is configured to adjust the temperature spread ($\Delta T_{taget}$) depending on the operating parameters.

10. A temperature control system (10) for the self-regulating temperature control of rooms of a building with a temperature control source (4), at least one consumer loop (3) with heat exchanger (30), which comprises a flow control valve (2), as well as a liquid heat carrier and a pump (5), comprising:

at least one thermostat (12) provided in a room, having input means for inputting a value which is indicative of a presettable room temperature ($T_{room-target}$), and an interface (9) for outputting an activation signal for at least one consumer loop (3) in the room; wherein
the thermostat (12) is configured to respond to an actual room temperature ($T_{room-actual}$) by the thermostat (12) outputting the activation signal as long as a deviation tolerance between the presettable room temperature ($T_{room-target}$) and the actual room temperature ($T_{room-actual}$) is exceeded;
**characterized in that**
the temperature control system (10) respectively comprises, for the at least one consumer loop (3), an adjustment device (1) according to any one of the claims 1 to 9, which is operatively connected to the flow control valve (2) of the consumer loop (3), and with which an activation signal or deactivation signal from the thermostat (12) is associated, which is arranged in the same room as the consumer loop (3).

11. The temperature control system (10) for the self-regulating temperature control of rooms of a building according to claim 10, **characterized in that**
the thermostat (12) and two or more consumer loops (3) are provided in a room of the building.

12. The temperature control system (10) for the self-regulating temperature control of rooms of a building according to claim 10 or 11, **characterized in that**
the thermostat (12) comprises a bimetallic element which responds to the actual room temperature ($T_{room-actual}$) and actuates an output of the activation signal or the deactivation signal.

13. The temperature control system for the self-regulating temperature control of rooms of a building according to any one of claims 10 to 12, **characterized in that**
the activation signal or deactivation signal is a binary signal comprising an on state with a signal level above a predetermined level value and an off state without a signal level or with a signal level below the predetermined level value.

14. The temperature control system for the self-regulating temperature control of rooms of a building according to any one of claims 10 to 13, **characterized in that**
the thermostat (12) comprises a microcomputer and a temperature sensor for detecting the actual room temperature ($T_{room-actual}$); wherein
the thermostat (12) detects and stores a course of the actual room temperature ($T_{room-actual}$) during and/or after the activation signal or the deactivation signal is output; and
the thermostat (12) and the adjustment device (1) are configured to communicate data on a course of detected actual room temperatures (Troom-actual).

15. The temperature control system for the self-regulating temperature control of rooms of a building according to any one of claims 10 to 14, **characterized in that**
the activation signal and/or the deactivation signal is communicated by means of wireless interfaces (9) from the thermostat (12) to the associated adjustment device (1)

16. A distributor device (11) for the self-regulating distribution of a liquid heat carrier to at least two or more consumer loops (3) with heat exchanger (30), each comprising a flow control valve (2), in a temperature control system (10) with a temperature control source (4) and a pump (5), comprising:

a flow distributor (13) and a return flow distributor (14), at which the consumer loops (3) are merged on the input side and on the output side, wherein the flow control valves (2) are provided at the flow distributor (13) or the return flow distributor (14);
**characterized in that**
the distributor device (11) comprises an adjustment device (1) for the self-regulating adjustment of the consumer loops (3) according to any one of claims 1 to 9 for each flow control valve (2).

17. A method for self-regulating adjustment of a flow of a liquid heat carrier through a consumer loop (3) with heat exchanger (30) in a temperature control system (10) for buildings with a temperature control source (4) and a pump (5);

the method comprising at least the following steps:

a) detecting an input-side flow temperature ($T_{flow}$) and an output-side return temperature ($T_{return\ flow}$) of the heat carrier passing through the consumer loop (3);

b) calculating a control difference ($\Delta T_{control\ difference}$) between a temperature difference ($\Delta T_{actual}$) from the detected input-side flow temperature ($T_{flow}$) and the output-side return flow temperature ($T_{return\ flow}$), and the predetermined temperature spread ($\Delta T_{target}$), that is the absolute value of the difference $\Delta T_{target}$ minus $\Delta T_{actual}$;

c) calculating and setting an adjustable flow cross-section in the consumer loop (3) based on the control difference ($\Delta T_{control\ difference}$);

**characterized by the steps:**

d) detecting a previous or current activation period and/or a deactivation period of the consumer loop (3); and

e) determining the variable temperature spread ($\Delta T_{taget}$) from the output-side return flow temperature ($T_{return\ flow}$) to the input-side flow temperature ($T_{flow}$) based on the activation duration and/or the deactivation duration.

18. The method for the self-regulating adjustment of a flow of a liquid heat carrier through a consumer loop (3) according to claim 17, **characterized in that** a smaller temperature spread ($\Delta T_{taget}$) is determined if at least one previous activation or deactivation period is greater than a reference value, or a greater temperature spread ($\Delta T_{taget}$) is determined if at least one previous activation or deactivation period is less than the reference value.

19. The method for the self-regulating adjustment of a flow of a liquid heat carrier through a consumer loop (3) according to claim 17 or 18, **characterized in that** the temperature spread ($\Delta T_{taget}$) is determined based on a course of successive, preceding activation and/or deactivation durations.

20. A method for the self-regulating distribution of a liquid heat carrier to at least two or more consumer loops (3) with heat exchanger in a temperature control system (10) for buildings with a temperature control source (4) and a pump (5); **characterized in that** the method for the self-regulating adjustment of a flow of a liquid heat carrier through an externally activatable consumer loop (3) according to one of claims 17 to 19 is carried out for each consumer loop (3).

21. An adjustment device (1) for the self-regulating adjustment of a flow control valve (2) according to any one of claims 1 to 9, wherein the adjustment device (1) further comprises:
a position detection means (15) configured to detect an actual position of the actuator (6).

22. The adjustment device (1) for the self-regulating adjustment of a flow control valve (2) according to claim 21, **characterized in that** the position detection means (15) is formed by a solenoid (16) and a hall sensor (17) associated with the solenoid (16).

**Revendications**

1. Dispositif de réglage (1) pour le réglage autorégulant d'une soupape de régulation de débit (2) d'une boucle d'utilisateur (3) avec un échangeur de chaleur (30) dans un système d'équilibrage de température (10) de locaux d'un immeuble avec une source d'équilibrage de température (4), un liquide caloporteur et une pompe (5), le dispositif de réglage (1) comprenant :

- un organe de réglage (6) à commande électrique conçu pour être couplé à la soupape de régulation de débit (2) pour régler et permettre la saisie d'une position d'ouverture de la soupape de réglage de débit (2) entre une position fermée et une position ouverte, de manière graduelle ou pas à pas par le dispositif de réglage (1),
- un moyen de saisie de température (7) pour saisir une température montante ($T_{Vorlauf}$) côté entrant de la boucle d'utilisateur (3), ainsi qu'une température de retour ($T_{Rücklauf}$) côté sortant du liquide caloporteur en circulation,
- un moyen de calcul (8) conçu pour calculer une commande électrique de l'organe de commande (6) qui correspond à une position d'ouverture prédéfinie de la vanne de réglage de débit (2) - associée à une certaine section de passage -, en se fondant sur une différence de régulation ($\Delta T_{Regeldifferenz}$),

cette différence de régulation, à calculer ($\Delta T_{Regeldifferenz}$) étant formée entre :

* une différence de température ($\Delta_{Ist}$) de la température montante ($T_{Vorlauf}$) saisie côté entrant par des moyens de saisie de température (7) et une température de retour ($T_{Rücklauf}$), côté sortant, et
* et un écart de température ($\Delta T_{Soll}$) prédéfini

par le moyen de calcul (8) entre la température de retour ($T_{Rücklauf}$) côté sortant et la température montante ($T_{Vorlauf}$) côté entrant, c'est-à-dire la valeur de la différence ($\Delta T_{Soll}$) moins ($\Delta_{Ist}$),
- une interface (9) pour recevoir un signal d'activation externe pour activer le moyen de calcul (8) et/ou le dispositif de réglage (1),

**caractérisé en ce que**

- le dispositif de réglage (1) comprend un moyen de saisie du temps et un moyen de mémoire conçus pour saisir et enregistrer une durée d'activation antérieure ou actuelle du signal d'activation et/ou une durée de désactivation entre deux activations, et
- le moyen de calcul (8) est conçu pour déterminer l'écart de température ($\Delta T_{Soll}$) en se fondant sur la durée d'activation et/ou la durée de désactivation.

2. Dispositif de réglage (1) pour le réglage autorégulant d'une vanne de réglage de débit (2) d'une boucle d'utilisateur (3) selon la revendication 1, **caractérisé en ce que** le dispositif de réglage (1) est conçu pour, pendant une durée d'activation, fournir la commande électrique calculée par le moyen de calcul (8) à l'organe de réglage (6) et pendant une durée de désactivation, n'envoyer aucune commande électrique ou une commande électrique prédéfinie correspondant à la position fermée de la vanne de réglage de débit à l'organe de réglage (6).

3. Dispositif de réglage (1) pour le réglage autorégulant d'une vanne de réglage de débit (2) d'une boucle d'utilisateur (3) selon la revendication 1 ou 2, **caractérisé en ce que** le dispositif de réglage (1) est conçu pour couper l'alimentation électrique du moyen de calcul (8) et/ou du dispositif de réglage (1) pendant une durée de désactivation.

4. Dispositif de réglage (1) pour le réglage autorégulant d'une vanne de réglage de débit (2) d'une boucle d'utilisateur (3) selon l'une des revendications 1 à 3, **caractérisé en ce que** le moyen de calcul (8) est conçu pour enregistrer au moins une valeur d'une position d'ouverture antérieure de la vanne de réglage de débit (2) dans la mémoire.

5. Dispositif de réglage (1) pour le réglage autorégulant d'une vanne de réglage de débit (2) d'une boucle d'utilisateur (3) selon l'une des revendications 1 à 4, **caractérisé en ce que** la mémoire contient une valeur de référence préalablement enregistrée pour la durée d'activation et/ou d'une valeur de référence préalablement enregistrée pour la durée de désactivation.

6. Dispositif de réglage (1) pour le réglage autorégulant d'une vanne de réglage de débit (2) d'une boucle d'utilisateur (3) selon l'une des revendications 1 à 5, **caractérisé en ce que** la mémoire contient une plage de valeurs mémorisées au préalable pour l'écart de température.

7. Dispositif de réglage (1) pour le réglage autorégulant d'une vanne de réglage de débit (2) d'une boucle d'utilisateur (3) selon l'une des revendications 1 à 6, **caractérisé en ce que** la mémoire contient un champ de caractéristiques préalablement mémorisées avec des valeurs associées de durée d'activation et/ou de durée de désactivation et des écarts de température ($\Delta T_{Soll}$) prédéfinis pour déterminer l'écart de température ($\Delta T_{Soll}$).

8. Dispositif de réglage (1) pour le réglage autorégulant d'une vanne de réglage de débit (2) d'une boucle d'utilisateur (3) selon l'une des revendications 1 à 7, **caractérisé en ce que** la mémoire contient une logique de commande mémorisée au préalable pour déterminer l'écart de température ($\Delta T_{Soll}$).

9. Dispositif de réglage (1) pour le réglage autorégulant d'une vanne de réglage de débit (2) d'une boucle d'utilisateur (3) selon l'une des revendications 1 à 8, **caractérisé en ce que** le dispositif de réglage (1) est conçu pour modifier l'écart de température ($\Delta T_{Soll}$) en fonction de la température montante ($T_{Vorlauf}$), et/ou le dispositif de réglage (1) est conçu pour modifier une largeur de bande de l'écart de température ($\Delta T_{Soll}$) en fonction de la température montante ($T_{Vorlauf}$), et/ou le dispositif de réglage (1) est conçu pour recevoir par l'interface (9) d'autres signaux externes avec des paramètres de fonctionnement du système d'équilibrage de température (10) et le moyen de calcul (8) est conçu pour adapter l'écart de température ($\Delta T_{Soll}$) en fonction des paramètres de fonctionnement.

10. Système d'équilibrage de température (10) pour équilibrer, de manière autorégulée la température de locaux d'un immeuble comprenant une source d'équilibrage de température (4), au moins une boucle d'utilisateur (3) avec un échangeur de chaleur (30) qui comporte une vanne de régulation de débit (2) ainsi qu'un liquide caloporteur et une pompe (5), au moins un thermostat (12) installé dans un local, un moyen d'entrée pour entrer une valeur correspondant à une température de local prédéfinie ($T_{Raum-Soll}$) ainsi qu'une interface (9) pour émettre un signal d'activation pour au moins une boucle d'utilisateur (3) dans le local,
dans lequel
le thermostat (12) est conçu pour répondre à une température de local effective ($T_{Raum-Ist}$), le thermostat (12) émettant le signal d'activation aussi longtemps qu'une tolérance d'écart entre la température de local prédéfinie ($T_{Raum-Soll}$) et la température réelle de local ($T_{Raum-Ist}$) est dépassée, **caractérisé en ce que**
le système d'équilibrage de température (10), pour au moins une boucle d'utilisateur (3), comprend un dispositif de réglage (1) selon l'une des revendications 1 à 9 coopérant avec la vanne de réglage de débit (2) de la boucle d'utilisateur (3) et auquel est associé un signal d'activation ou un signal de désactivation du thermostat (12) installé dans le même local que la boucle d'utilisateur (3).

11. Système d'équilibrage de température (10) pour l'équilibrage autorégulant de la température de locaux d'un immeuble selon la revendication 10, **caractérisé en ce qu'**
un thermostat (12) et deux ou plusieurs boucles d'utilisateur (3) sont installés dans un local de l'immeuble.

12. Système d'équilibrage de température (10) pour l'équilibrage autorégulant de la température de locaux d'un immeuble selon l'une des revendications 10 ou 11, **caractérisé en ce que**
le thermostat (12) comporte un élément bimétal qui répond à la température effective du local ($T_{Raum-Ist}$) et actionne l'émission du signal d'activation ou du signal de désactivation.

13. Système d'équilibrage de température pour l'équilibrage autorégulant de la température de locaux d'un immeuble selon l'une des revendications 10 à 12, **caractérisé en ce que**
le signal d'activation ou le signal de désactivation est un signal binaire qui comprend un état de marche avec un niveau de signal au-dessus d'une valeur de niveau prédéfinie et un état de coupure sans niveau de signal ou un niveau de signal en dessous d'une valeur de niveau prédéfinie.

14. Système d'équilibrage de température (10) pour l'équilibrage autorégulant de la température de locaux d'un immeuble selon l'une des revendications 10 à 13, **caractérisé en ce que**
le thermostat (12) comprend un microcalculateur et un capteur de température pour saisir la température effective du local ($T_{Raum-Ist}$),
* le thermostat (12) saisissant l'évolution de la température effective du local ($T_{Raum-Ist}$) et l'enregistrant pendant et/ou après que le signal d'activation ou le signal de désactivation n'ait été émis, et
le thermostat (12) et le dispositif de réglage (1) sont conçus pour communiquer les données relatives à l'évolution des températures effectivement saisies du local ($T_{Raum-Ist}$).

15. Système d'équilibrage de température pour l'équilibrage autorégulant de la température de locaux d'un immeuble selon l'une des revendications 10 à 14, **caractérisé en ce que**
le signal d'activation et/ou le signal de désactivation sont transmis par des interfaces sans fil (9) du thermostat (12) vers le dispositif de réglage (1) associé.

16. Dispositif de distribution (11) pour la répartition autorégulante d'un liquide caloporteur vers au moins une ou plusieurs boucles d'utilisateur (3) avec un échangeur de chaleur (30) comprenant une vanne de régulation de débit (2) dans un système d'équilibrage de température (10) avec une source d'équilibrage (4) et une pompe (5),

- un répartiteur montant (13) et un répartiteur de retour (14) réunissant les boucles d'utilisateur (3) côté entrée et côté sortie, les vannes de régulation de débit (2) étant installées dans le distributeur montant (13) ou le distributeur de retour (14),

**caractérisé en ce que**
le dispositif répartiteur (11) comprend pour chaque vanne de régulation de débit (2), un dispositif de réglage (1) selon l'une des revendications 1 à 9, pour le réglage autorégulant des boucles d'utilisateur (3).

17. Procédé de réglage autorégulant d'un débit de liquide caloporteur dans une boucle d'utilisateur (3) avec un échangeur de chaleur (30) dans un système d'équilibrage de température (10) pour des immeubles avec une source d'équilibrage (4) et une pompe (5),
le procédé comprenant au moins les étapes suivantes consistant à :

a) saisir une température montante ($T_{Vorlauf}$) côté entrant et une température de retour ($T_{Rücklauf}$) côté sortant du liquide caloporteur circulant dans la boucle d'utilisateur (3),
b) calculer une différence de régulation ($\Delta T_{Regeldifferenz}$) entre :

* une différence de température ($\Delta T_{ist}$) correspondant à la température montante ($T_{Vorlauf}$) côté entrant et la température de retour ($T_{Rücklauf}$) côté sortant, et
* un écart de température prédéfini ($\Delta T_{Soll}$), c'est-à-dire la valeur de la différence ($\Delta T_{Soll}$) moins ($\Delta T_{ist}$),

c) calculer et régler une section de passage réglable dans la boucle d'utilisateur (3) en se fondant sur la différence de réglage ($\Delta T_{Regeldifferenz}$),

**caractérisé par** les étapes consistant à :

d) saisir une durée d'activation et/ou une durée de désactivation antérieures ou actuelles de la boucle d'utilisateur (3), et
e) déterminer l'écart de température variable ($\Delta T_{Soll}$) de la température de retour ($T_{Rücklauf}$) côté sortant et la température montante ($T_{Vorlauf}$) côté montant en se fondant sur la durée d'activation et/ou la durée de désactivation.

18. Procédé de réglage autorégulant d'un débit de liquide caloporteur dans une boucle d'utilisateur (3) selon la revendication 17,
**caractérisé en ce qu'**
on détermine un plus petit écart de température ($\Delta T_{Soll}$) si au moins une durée d'activation ou une durée de désactivation antérieures est supérieure à une valeur de référence, ou
on détermine un écart de température ($\Delta T_{Soll}$) plus grand si au moins une durée d'activation ou une durée de désactivation antérieures est inférieure à la valeur de référence.

19. Procédé de réglage autorégulant d'un débit de liquide caloporteur dans une boucle d'utilisateur (3) selon la revendication 17 ou 18,
**caractérisé en ce qu'**
on détermine l'écart de température ($\Delta T_{Soll}$) en se fondant sur l'évolution de durée d'activation et/ou de durée de désactivation, successives, antérieures.

20. Procédé de répartition autorégulant d'un liquide caloporteur entre au moins deux ou plusieurs boucles d'utilisateur (3) avec un échangeur de chaleur dans un système d'équilibrage de température (10) pour des immeubles ayant une source d'équilibrage de température (4) et une pompe (5),
procédé **caractérisé en ce que**
pour chaque boucle d'utilisateur (3) on effectue le procédé de réglage autorégulant du débit de liquide caloporteur dans une boucle d'utilisateur (3) externe, activable selon l'une des revendications 17-19.

21. Dispositif de réglage (1) pour le réglage autorégulant d'une vanne de réglage de débit (2) selon l'une des revendications 1 à 9, le dispositif de réglage (1) comprenant en outre :

- un moyen de saisie de position (15) conçu pour saisir la position actuelle de l'organe de réglage (6).

22. Dispositif de réglage (1) pour le réglage autorégulant d'une vanne de réglage de débit (2) selon la revendication 21,
**caractérisé en ce que**
le moyen de saisie de position (15) se compose d'un aimant (16) et d'un capteur à effet Hall (17) associé à l'aimant (16).

**Fig. 1**

Fig. 2

**Fig. 3**

Funktion Sollwert berechnen (ohne Übergabeparameter)

Fig. 4

Funktion Spreizungsregler (ohne Übergabeparameter)

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015142879 A1
- US 20090314484 A1
- DE 102006052124 A1
- DE 102009004319 A1
- DE 102014202738 A1
- DE 102015222110 A1
- EP 2653789 A2
- US 2014321839 A1
- EP 2679930 A1
- WO 2015148596 A1
- EP 3012705 A1